(19) Europäisches Patentamt
European Patent Office
Office européen des brevets

(11) **EP 2 875 316 B1**

(12) **FASCICULE DE BREVET EUROPEEN**

(45) Date de publication et mention
de la délivrance du brevet:
**21.12.2016 Bulletin 2016/51**

(21) Numéro de dépôt: **13739696.6**

(22) Date de dépôt: **19.07.2013**

(51) Int Cl.:
*G01F 23/292* (2006.01)    *G01C 13/00* (2006.01)
*G06T 7/20* (2006.01)

(86) Numéro de dépôt international:
**PCT/EP2013/065324**

(87) Numéro de publication internationale:
**WO 2014/013064 (23.01.2014 Gazette 2014/04)**

(54) **PROCEDE DE DETERMINATION DE PARAMETRES D'OBSERVATION D'UNE SURFACE D'EAU PAR IMAGERIE**

VERFAHREN ZUR BESTIMMUNG VON PARAMETERN EINER WASSEROBERFLÄCHENBEOBACHTUNG DURCH ABBILDUNG

METHOD FOR DETERMINING PARAMETERS OF WATER SURFACE OBSERVATION BY IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2012 FR 1256965**

(43) Date de publication de la demande:
**27.05.2015 Bulletin 2015/22**

(73) Titulaires:
• **Université de Savoie**
**73000 Chambery (FR)**
• **Centre National de la Recherche Scientifique**
**75016 Paris (FR)**

(72) Inventeurs:
• **SAULNIER, Georges-Marie**
**F-38950 Saint Martin Le Vinoux (FR)**
• **FOURQUET, Guillaume**
**F-26700 Pierrelatte (FR)**

(74) Mandataire: **Croonenbroek, Thomas Jakob et al**
**Innovincia**
**11, avenue des Tilleuls**
**74200 Thonon-les-Bains (FR)**

(56) Documents cités:
**FR-A1- 2 865 802      US-A- 6 098 029**
**US-A1- 2010 322 462**

• **Guillaume Fourquet: "Développement d'un système hydrométrique par analyses d'images numériques : évaluation d'une année de fonctionnement continu sur l'Isère à Saint Martin d'Hères", , 17 mars 2005 (2005-03-17), XP055067996, Extrait de l'Internet: URL:http://www.lthe.fr/PagePerso/boudevil/ THESES/fourquet_05.pdf [extrait le 2013-06-24]**
• **J.D. CREUTIN ET AL: "River gauging using PIV techniques: a proof of concept experiment on the Iowa River", JOURNAL OF HYDROLOGY, vol. 277, no. 3-4, 1 juin 2003 (2003-06-01), pages 182-194, XP055068009, ISSN: 0022-1694, DOI: 10.1016/S0022-1694(03)00081-7**

**Description**

L'invention concerne un procédé de détermination d'une surface d'eau par imagerie. Plus particulièrement ce procédé s'applique à l'estimation du niveau d'une rivière ainsi qu'à l'estimation de ses vitesses de surface dans le cadre de la surveillance des rivières.

La rivière est un milieu naturel qui peut devenir extrêmement dangereux en périodes de crues. Ces périodes sont caractérisées par une montée d'eau de la rivière, engendrée par des événements climatiques et météorologiques particuliers.

Les crues les plus dévastatrices peuvent causer des pertes humaines et des pertes matérielles considérables. Aussi, il est primordial de pouvoir surveiller l'état des rivières et de pouvoir avertir les autorités compétentes en cas de danger. Egalement le suivi des régimes hydrologiques pour la gestion de la ressource en eaux, notamment dans le contexte du changement climatique, nécessite de suivre l'état des rivières depuis l'étiage, c'est-à-dire leur niveau le plus bas, jusqu'aux hautes eaux. Les paramètres des rivières à surveiller incluent le niveau ainsi que les vitesses de surface de la rivière.

A ce jour, la plupart des capteurs en utilisation sont des dispositifs intrusifs nécessitant d'être placés au moins partiellement dans la rivière ou d'être situés à leur proximité.

On connaît par exemple le flotteur qui, associé à un jeu de poulies et de contrepoids, se déplace solidairement avec la surface de la rivière. D'autre part, les flotteurs ne permettent pas de mesurer la vitesse de surface de la rivière. De plus, l'installation et l'entretien de ce type de capteurs sont difficiles et onéreux. On connaît par exemple les flotteurs à sonde électronique ou les capteurs ultrasons. Egalement, ces capteurs ne mesurent que la hauteur d'eau. Ils ne permettent de plus pas de contrôle de la hauteur d'eau en situation en temps réel.

Par ailleurs, un inconvénient des capteurs intrusifs est qu'ils risquent d'être emportés et/ou détériorés en période de crues.

Il existe des capteurs non intrusifs permettant de surveiller le niveau d'eau des rivières à distance.

On connaît des systèmes d'imagerie numériques, par exemple des caméras ou appareils photos, fixés à une structure, tel un pilier ou un arbre, et surveillant l'évolution du niveau d'eau d'une rivière. Ces dispositifs nécessitent la présence de repères structurels, tels une berge, un pilier de pont ou d'une échelle graduée partiellement immergé, dans le champ de la caméra. Un algorithme permet de déterminer l'intersection entre la rivière et le point de repère structurel. Cet algorithme est basé sur la différence de luminosité entre la surface de la surface d'eau et la luminosité du repère structurel.

Un tel dispositif est décrit par exemple dans la thèse "Développement d'un système hydrométrique par analyses d'images numériques" soutenue le 07/03/2005 par Guillaume Fourquet.

Un inconvénient de cette solution est qu'elle nécessite d'établir un seuil de luminosité permettant de distinguer la rivière du repère structurel. Cependant, la luminosité de la surface d'eau varie selon les conditions météorologiques, le moment de la journée et le site d'observation. Il est donc difficile d'établir un unique seuil de luminosité permettant de distinguer la rivière avec précision dans n'importe quelle condition lumineuse.

Les systèmes d'imagerie numérique permettent en outre de déterminer les vitesses de surface des rivières, cependant les résultats manquent de précisions.

L'invention a donc pour objectif de pallier au moins partiellement les inconvénients de l'art antérieur en proposant une méthode de détermination précise du niveau d'une surface d'eau et de ses vitesses de surface. La méthode est en outre facilement adaptable en fonction des sites géographiques à surveiller et des moyens de prise de vues.

A cet effet, l'invention a pour objet un procédé de détermination d'un paramètre d'observation associé à une surface d'eau par imagerie, comprenant les étapes suivantes :

- une phase de référencement comprenant les étapes suivantes :

  ○ on répartit des points de référence sur un site d'observation, ledit site d'observation comprenant une surface d'eau, au moins une structure permanente et au moins un support visuel au moins partiellement immergé dans la surface d'eau, lesdits points de références comprenant des points de référence matériels présents sur la structure permanente et sur le support visuel,
  ○ on mesure les coordonnées géographiques référence desdits points de référence,
  ○ on détermine des coordonnées images référence desdits points de référence à partir d'au moins une image référence,

- une phase d'observation comprenant les étapes suivantes :

  ○ on capture au moins une image d'observation du site d'observation,
  ○ on établit un modèle mathématique permettant de déterminer les coordonnées images d'un objet compris sur le site d'observation, à partir de coordonnées géographiques dudit objet, grâce aux coordonnées géographiques référence des points de référence, aux coordonnées images référence respectives desdits points de référence et à des coordonnées images d'observation respectives desdits points de référence sur l'image d'observation,
∘ on établit les coordonnées images d'observation du niveau de la surface d'eau à l'emplacement du au moins un support visuel sur l'image d'observation grâce au support visuel,
∘ on utilise le modèle mathématique avec les coordonnées images d'observation de la surface d'eau sur l'image d'observation pour déterminer au moins un paramètre d'observation de la surface d'eau,

caractérisé en ce que la phase de référencement comprend l'étape suivante:

∘ on place au moins une structure temporaire sur le site d'observation à distance de la structure permanente et à distance du support visuel afin d'indiquer une position d'au moins un point de référence immatériel, les coordonnées images référence étant déterminées des points de référence matériels et du ou des points de référence immatériels.

L'invention permet d'améliorer la précision et/ou la robustesse des résultats d'une façon simple. De plus, le dispositif permettant la mise en oeuvre du procédé peut être placé à distance de la surface de l'eau, ainsi, il ne risque pas d'être dégradé par l'eau en cas de crues.

Selon un autre aspect du procédé de détermination, la surface d'eau est déterminée par colorimétrie des pixels.

Selon un autre aspect du procédé de détermination, la phase d'observation comprend une étape supplémentaire lors de laquelle :

- on détecte les points de référence matériels sur l'image d'observation,
- on compare les coordonnées images d'observation des points de référence matériels satisfaisant un seuil minimum de corrélation avec leurs coordonnées images référence respectives points de référence matériels,
- on détermine un déplacement individuel des points de référence matériels satisfaisant un seuil minimum de corrélation entre l'image d'observation et l'image référence,
- on détermine un déplacement global de l'image d'observation correspondant au déplacement individuel commun à une majorité de points de référence matériels satisfaisant un seuil minimum de corrélation,
- on corrige les coordonnées images de tous les points de référence de sorte que chaque point de référence se déplace d'une distance égale au déplacement global entre l'image de référence et l'image d'observation. On obtient ainsi des coordonnées images corrigées desdits points de référence matériels et desdits points de référence immatériels,
- on établit le modèle mathématique à partir des coordonnées géographiques référence desdits points de référence matériels et desdits points de référence immatériels, et de leurs coordonnées images corrigées respectives.

Selon un autre aspect du procédé de détermination, les paramètres d'observation comprennent au moins un paramètre parmi le niveau de la surface d'eau et les vitesses de surfaces de la surface d'eau.

Selon un autre aspect du procédé de détermination, on établit les coordonnées images d'observation de la surface d'eau à l'emplacement du au moins un support visuel comme correspondant aux coordonnées images d'observation de l'intersection réelle entre le support visuel et la surface d'eau.

Selon un autre aspect du procédé de détermination, la détermination de l'intersection réelle entre le support visuel et la surface d'eau comprend les étapes suivantes :

- on détermine une pluralité d'intersections possibles entre le support visuel et la surface d'eau en analysant la valeur d'au moins un paramètre associé aux pixels représentant une zone de l'image comprenant au moins le support visuel et une partie de la surface d'eau,
- on détermine les contours du support visuel en analysant la valeur d'au moins un autre paramètre associé aux pixels représentant une zone de l'image comprenant au moins le support visuel et une partie de la surface d'eau,
- on détermine l'intersection réelle comme correspondant à la fois à une intersection possible et à une discontinuité des contours du support visuel.

Selon un autre aspect du procédé de détermination, au moins une vitesse de surface est calculée à partir d'une première image d'observation et d'une deuxième image d'observation, en estimant le déplacement d'au moins un traceur sur la surface de la surface d'eau entre ladite première image d'observation et ladite deuxième image d'observation, et à partir d'un intervalle de temps entre la capture de ladite première image d'observation et ladite deuxième image d'observation.

Selon un autre aspect du procédé de détermination, le déplacement du traceur est déterminé par vélocimétrie par imagerie de particules.

Selon un autre aspect du procédé de détermination, le procédé de détermination comprend les étapes suivantes :

- on soustrait deux images d'observation afin d'obtenir une image composite,
- on compare la valeur d'au moins un paramètre associé aux pixels de l'image composite à un seuil de variation de la valeur dudit paramètre,
- on conserve des zones de l'image composite définies par les pixels dont la valeur d'au moins un paramètre est supérieure audit seuil de variation de la valeur dudit paramètre, les zones de l'image composite conservées sont appelées zones mouvantes,
- on détermine les vitesses de surface des traceurs à partir desdites zones mouvantes.

Selon un autre aspect du procédé de détermination, la détermination d'au moins une vitesse de surface comprend une étape supplémentaire lors de laquelle on crée une première image mise à l'échelle à partir de la première image d'observation et une deuxième image mise à l'échelle à partir de la deuxième image d'observation sur lesquelles tous les pixels représentent la même surface géographique.

L'invention a aussi pour objet un système de détermination d'un paramètre d'observation associé à une surface d'eau, pour la mise en oeuvre d'un procédé de détermination d'un paramètre d'observation associé à une surface d'eau par imagerie tel que défini précédemment,

caractérisé en ce que ledit système comprend :

- un dispositif de prise de vues configuré pour capturer des données relatives à un site d'observation comprenant la surface d'eau, lesdites données comprenant :

  ◦ au moins une image d'observation du site d'observation comprenant la surface d'eau, au moins une structure permanente et au moins un support visuel au moins partiellement immergé dans la surface d'eau, et
  ◦ au moins une image référence du site d'observation comprenant des points de référence matériels et immatériels, lesdits points de référence matériels étant présents sur la structure permanente et sur le support visuel, et la position d'au moins un point de référence immatériel étant indiquée à l'aide d'au moins une structure temporaire sur le site d'observation à distance de la structure permanente et à distance du support visuel,

- des moyens de détermination de coordonnées géographiques référence desdits points de référence matériels et desdits points de référence immatériels,
- des moyens de traitement des données configurés pour :

  ◦ déterminer des coordonnées images préférence des points de référence matériels et des points de référence immatériels,
  ◦ déterminer un modèle mathématique permettant de calculer des coordonnées images à partir de coordonnées géographiques d'un objet sur le site d'observation en utilisant les coordonnées géographiques référence et coordonnées images référence des points de référence matériels et des points de référence immatériels et des coordonnées images d'observation respectives desdits points de référence sur l'image d'observation,
  ◦ établir les coordonnées images d'observation de la surface d'eau à l'emplacement du au moins un support visuel sur l'image d'observation grâce au support visuel,
  ◦ utiliser le modèle mathématique avec les coordonnées images d'observation de la surface d'eau sur l'image d'observation pour déterminer au moins un paramètre d'observation de la surface d'eau, et

- des moyens de transmission des données entre le dispositif de prise de vues et les moyens de traitement des données.

Selon un autre aspect du système de détermination d'un paramètre le dispositif de prise de vues est un dispositif de prise de vues numérique.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 représente le découpage en pixels d'une image capturée par un dispositif de prise de vues,
- la figure 2 schématise le modèle mathématique permettant de former une image en deux dimensions à partir d'une scène en trois dimensions,
- la figure 3a représente une première image capturée pour calculer la vitesse de déplacement d'un objet grâce à la vélocimétrie par imagerie de particules,
- la figure 3b représente une deuxième image capturée pour calculer la vitesse de déplacement d'un objet grâce à la vélocimétrie par imagerie de particules,
- la figure 4 schématise une étape d'initialisation du procédé,
- la figure 5 représente un site à surveiller sur lequel apparaissent des points de référence pour le géoréférencement,
- la figure 6 schématise des étapes du procédé de détermination,
- la figure 7 schématise une étape de détermination de niveau d'une surface d'eau,
- la figure 8a représente une image d'observation sur laquelle un déplacement individuel de points de référence est indiqué,
- la figure 8b représente l'image d'observation de la figure 8a sur laquelle un déplacement global des points de référence est indiqué,
- la figure 9a représente une partie de l'image d'observation de la figure 8a sur laquelle une position image en première approximation d'un support visuel est indiquée,
- la figure 9b représente une partie de l'image d'observation de la figure 8a sur laquelle une position image corrigée du support visuel de la figure 9a est indiquée,
- la figure 10a représente une partie de l'image d'observation de la figure 8a sur laquelle les intersections possibles entre le support visuel de la figure 9a et la surface d'eau sont indiquées,
- la figure 10b représente une partie de l'image d'observation de la figure 8a sur laquelle les contours du support visuel de la figure 9a ainsi que les intersections possibles entre le support visuel de la figure 9a et la surface d'eau,
- la figure 10c représente une partie de l'image d'observation de la figure 8a sur laquelle le choix final de l'intersection entre le support visuel de la figure 9a et la surface d'eau,
- la figure 11 schématise une étape de détermination de vitesses de surface de la surface d'eau,
- la figure 12 schématise un site à surveiller et met en évidence les distances entre différents éléments,
- la figure 13 représente une image mise à l'échelle d'une partie de l'image de la figure 8a ainsi que son découpage en pixels,
- la figure 14a représente une première image d'observation comprenant un traceur utilisé dans l'estimation des vitesses de surface,
- la figure 14b représente une deuxième image comprenant le traceur capturée après l'image de la figure 9a et étant utilisée avec cette dernière dans l'estimation des vitesses de surface,
- la figure 14c représente une image composite obtenue par soustraction des images représentées par les figures 14a et 14b en fonction d'un seuil de différence de couleur,
- la figure 14d représente une image composite obtenue par soustraction des images représentées par les figures 14a et 14b en fonction d'un seuil de différence de couleur plus élevé que celui utilisé pour la figure 14b,
- la figure 15 représente une image mise à l'échelle et les vitesses de surface de la surface d'eau estimée.

Dans ces figures, les éléments sensiblement identiques portent les mêmes références.

L'invention concerne un procédé de détermination de paramètres d'observation d'une surface d'eau par imagerie. Pour mettre en oeuvre ce procédé, on utilise un système de détermination. Le système de détermination comprend un dispositif de prise de vue, des moyens de détermination de coordonnées géographiques référence de points de référence, des moyens de transmission de données et des moyens de traitement de données.

Le dispositif de prise de vues est apte à capturer des données d'un site d'observation comprenant une surface d'eau, les données comprennent des images du site d'observation. Le dispositif de prise de vues comprend de préférence un appareil photographique numérique (APN) tel que disponible dans le commerce. Un APN d'entrée de gamme et peu coûteux peut par exemple être utilisé. Selon une variante, le dispositif de prise de vues comprend une caméra numérique à la place de l'APN.

Le dispositif de prise de vues est configuré pour capturer des images à une fréquence choisie par l'utilisateur. Dans le cas de l'utilisation de la caméra numérique, la prise de vues peut se faire de manière continue.

Le système de détermination comprend aussi des moyens de détermination de coordonnées géographiques références de points de références.

Ces moyens de détermination de coordonnées géographiques références comprennent par exemple des moyens d'indication de points de référence, par exemple cibles réfléchissantes aptes à indiquer la position d'un point de référence sur le site d'observation ou par exemple des points facilement reconnaissables (coin de toiture, arête de bâtiment). Ces cibles sont de plus aptes à être agencées ou présentes d'une part sur une structure permanente du site d'observation, tel un pont, indiquant ainsi la position d'un point de référence matériel. D'autre part, les cibles réfléchissantes sont aptes à être agencées sur une structure temporaire, telle une balise, indiquant ainsi un point de référence immatériel. D'autre part, les cibles reconnaissables sont déjà présentes ou nouvellement agencées sur le site. Ceci sera décrit en détail par la suite.

Ces moyens de détermination de coordonnées comprennent aussi des moyens de mesures des coordonnées géographiques, par exemple un théodolite ou un lidar.

Afin d'exploiter les images capturées par le dispositif de vues, le système de détermination comprend des moyens de transmission de données apte à transmettre les données capturées par le dispositif de prise de vues vers les moyens de traitement de données.

Selon une variante, la transmission de données se fait par internet. Dans ce cas, les moyens de transmission de données comprennent par exemple antenne équipant le dispositif de prise de vues et configurée pour utiliser le réseau Wifi, ou d'un câble dans le cadre d'une transmission filaire.

Selon une autre variante, la transmission de données se fait par le réseau téléphonique. Dans ce cas, le dispositif de prise de vues peut être intégré à un téléphone portable ou à un micro-ordinateur apte à utiliser le réseau téléphonique.

Selon encore une autre variante, la transmission de données a lieu quand un utilisateur vient sur le site pour récupérer les données. Dans ce cas, le système de détermination comprend aussi des moyens de stockage de données sur le site, par exemple une carte mémoire du dispositif de prise de vues. Ces moyens de stockage de données sur le site sont accessibles aux utilisateurs se déplaçant sur le site.

Le système de détermination comprend aussi des moyens de traitement de données configurés pour traiter les données transmises. Les moyens de traitement de données comprennent par exemple un ordinateur et des algorithmes de traitement de données. Les algorithmes de traitement de données sont aptes à déterminer une hauteur de la surface d'eau et des vitesses de surfaces de la surface d'eau, ainsi que d'apporter des corrections aux données transmises afin d'améliorer la précision des résultats.

Les moyens de traitement des données sont, entre autres, configurés pour déterminer des coordonnées images références des points de référence matériels et des points de référence immatériels.

Les moyens de traitement des données sont aussi configurés pour déterminer un modèle mathématique permettant de calculer des coordonnées images à partir de coordonnées géographiques d'un objet sur le site d'observation en utilisant les coordonnées géographiques références et les coordonnées images références des points de référence matériels et des points de référence immatériels. Ceci sera décrit en détail par la suite.

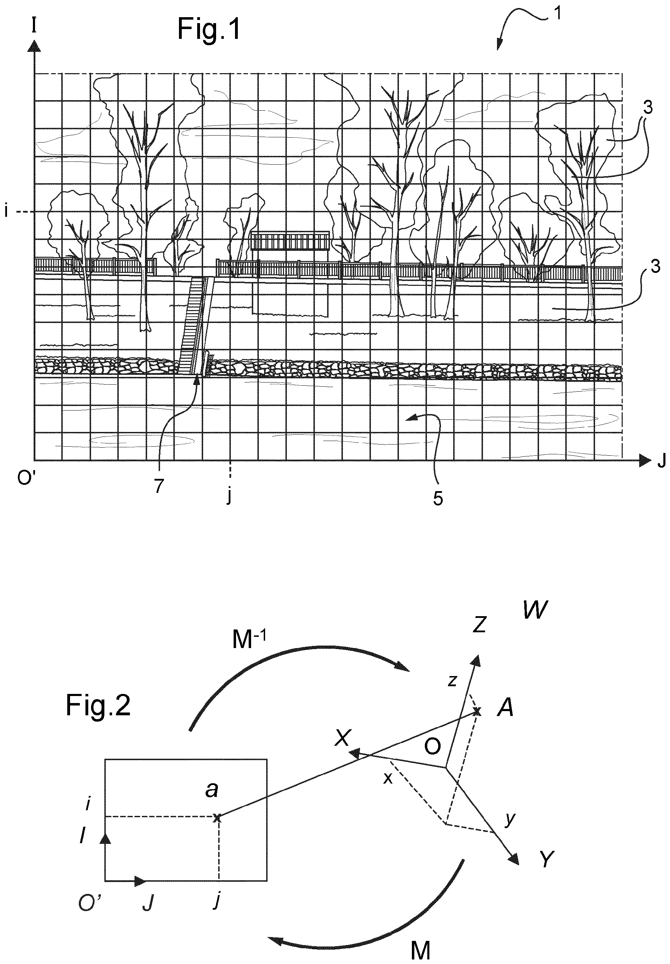

La figure 1 représente une image 1 d'un site d'observation capturée par le dispositif de prise de vues. Cette image est une mosaïque dont les divisions sensiblement carrées sont appelées pixels 3.

Chaque pixel 3 est caractérisé par sa position sur l'image. La figure 1 illustre le repère image ($O$ ; $I$, $J$). Dans ce repère image ($O$ ; $I$, $J$), la position d'un pixel 3 est exprimée selon des coordonnées images $(i, j)$ pouvant par exemple correspondre au numéro de ligne $(i)$ et au numéro de colonne ($j$) d'un pixel 3. L'origine $O$' du repère image ($O$ ; $I$, $J$) est choisie conventionnellement dans le coin en bas à gauche de l'image 1.

Sur cette image 1, les pixels 3 représentés ne sont pas à l'échelle avec l'image 1, en réalité, il y a plusieurs centaines voire plusieurs milliers de pixels 3 selon la largeur et selon la hauteur de l'image 1.

Deux types d'information sont utilisés afin de mesurer un niveau de surface d'eau et avantageusement ses vitesses de surface.

Le premier type d'information est l'image 1 elle-même, contenant des informations relatives aux mesures souhaitées : la position d'un pixel 3 et son information colorimétrique.

Le second type d'information provient d'un modèle mathématique permettant de calculer la position image sur l'image 1 d'un objet à partir de ses coordonnées géographiques dans le monde. Par la suite, l'adjectif « image » qualifiera les caractéristiques d'une image 1 capturée par le dispositif de prise de vues. L'adjectif « géographique » qualifiera les caractéristiques du monde réel.

Le procédé de détermination comprend d'une part une phase de référencement lors de laquelle on utilise des points de référence afin d'établir une correspondance référence entre la position d'un objet se situant sur le site à surveiller et sa position sur une image référence.

D'autre part, le procédé de détermination comprend une phase d'observation lors de laquelle on capture des images du site à surveiller et on les traite en utilisant la correspondance référence, afin de déterminer le niveau de la surface d'eau et avantageusement ses vitesses de surface.

Les principes du procédé vont être expliqués dans un premier temps, puis le procédé sera décrit en détail.

## 1. Principes du procédé

### a. Mesure du niveau d'eau

#### • Colorimétrie

Les pixels 3 comprennent les informations de base, fournies par le dispositif de prise de vues disposé sur le site d'observation.

La première information fournie par un pixel 3 est une information lumineuse. En effet, chaque pixel 3 comprend une information lumineuse reçue par au moins un capteur de lumière.

Un pixel 3 comprenant trois ou quatre capteurs donne une information lumineuse colorimétrique. On obtient donc une image 1 en couleur.

Un pixel comprenant un seul capteur donne une information comprenant une seule teinte plus ou moins lumineuse. On obtient donc par exemple une image en niveaux de gris.

Les capteurs sont par exemple des photodiodes sensibles à différentes longueurs d'onde.

La détermination du niveau de surface d'eau 5 repose sur la distinction sur une image 1 de l'intersection entre la surface de la surface d'eau 5 et au moins un support visuel 7 défini.

Selon une forme de réalisation préférentielle, cette distinction se fait en détectant la variation colorimétrique des pixels 3 sur le support visuel 7. En effet, le support visuel 7 comprend une partie immergée dans la surface d'eau 5 et une partie non immergée. La couleur de la partie non immergée est sensiblement homogène, alors que la partie immergée n'est pas visible avec un tel procédé car elle est sous la surface d'eau 5.

Les caractéristiques colorimétriques du support visuel 7 présentent une discontinuité avec la surface 5 qui est détectable à l'oeil nu et par le dispositif de prise de vues. Le procédé de détermination du niveau de la surface d'eau 5 met en évidence cette discontinuité colorimétrique.

La couleur du support visuel 7 n'influe pas dans le procédé d'estimation du niveau de la surface d'eau 5.

L'utilisation de la colorimétrie est particulièrement adaptée à des prises de vues en extérieur dans des conditions lumineuses variables car elle ne nécessite pas l'utilisation de seuil de luminosité. Le procédé est donc facilement adaptable à toutes sortes de sites à surveiller, à toutes conditions météorologiques et à tout moment de la journée.

En informatique, les couleurs sont issues d'un codage de plusieurs paramètres numériques. Plusieurs types de codage sont discernables.

Un premier type de codage est par exemple issu d'une synthèse additive telle que le codage RGB (de l'anglais « Red Green Blue ») où sont additionnées plusieurs intensités d'unités de base, afin de créer une couleur. Dans ce cas, les unités de base comprennent trois couleurs primaires : le rouge, le vert et le bleu. Ce codage définit aussi la norme K d'une couleur qui rend compte de l'intensité lumineuse reçue par un pixel. La norme K est obtenue selon l'équation (1) :

$$K = \sqrt{R^2 + G^2 + B^2} \qquad\qquad (1)$$

où R est l'intensité rouge du pixel, G est l'intensité verte du pixel, et B est l'intensité bleue du pixel.

Un autre type de codage est issu d'une synthèse soustractive telle que le codage CMJ (Cyan Magenta Jaune) où est soustraite à la lumière blanche l'intensité des unités de bases qui n'est pas nécessaire à la constitution de chaque couleur. Tous les types de codages permettent d'obtenir les mêmes couleurs, par mélange en différentes proportions des unités de base.

Le procédé de détermination emploie une pluralité de codages afin de pouvoir améliorer la précision de ses résultats.

Le procédé de détermination emploie d'une part, un codage HSV (Teinte Saturation Luminance de l'anglais « Hue Saturation Value ») qui est un codage de type additif. Selon ce codage, la Teinte représente les couleurs pures allant du rouge, au vert et au bleu. La Saturation correspond à une quantité de blanc, s'ajoutant à la couleur pure et traduit le fait que la couleur de base est plus ou moins terne. Enfin la Luminance traduit la luminosité générale de la couleur et permet de quantifier l'intensité de l'éclairement.

Le codage HSV est particulièrement bien adapté pour le codage d'informations provenant d'un milieu en extérieur, c'est-à-dire en éclairement non contrôlé, présentant de fortes variations d'intensité lumineuse au cours de la journée. Selon ce codage, la Luminance rend directement compte de la luminosité et permet donc de comparer les couleurs les unes aux autres en la normant. Ce codage permet aussi d'éviter le problème de saturation des intensités des unités de base.

Le procédé de détermination emploie d'autre part le codage RGB. Selon une autre forme de réalisation, la distinction entre le support visuel et la surface d'eau est détectée en surveillant la luminosité des pixels d'une image en niveaux de gris.

❖ le modèle mathématique

En plus de sa couleur, chaque pixel 3 est caractérisé par sa position sur l'image 1 du dispositif de prise de vues. En déterminant les pixels 3 correspondant à la surface de la surface d'eau 5 on peut donc définir le niveau de la surface d'eau 5.

Les distances sur l'image 1 sont exprimées en pixels 3, afin d'établir le niveau géographique de la surface d'eau 5, il faut convertir ces distances en unités métriques. Pour cela, on met en correspondance des distances pixels avec des distances métriques. Par exemple, on peut faire correspondre la taille image d'un objet mesuré en pixels sur l'image en deux dimensions (2D) avec sa taille géographique, par exemple mesurée avec un mètre dans un site en trois dimensions (3D). Cette correspondance permet d'établir un modèle mathématique $\mathfrak{M}$ réalisant la conversion de façon systématique.

Ce modèle mathématique $\mathfrak{M}$ est schématisé par la figure 2. Un point quelconque *A* présente des coordonnées géographiques *(x, y, z)* définies dans un repère géographique *(O, X, Y, Z)* situé dans la scène en 3D *W*. Ledit point quelconque *A* présente un point correspondant image *a* présentant des coordonnées images *(i, j)* définies dans un repère image *(O', I, J)* situé sur l'image. Le modèle mathématique $\mathfrak{M}$ permet d'exprimer les coordonnées images *(i, j)* du point correspondant image *a* en fonction des coordonnées géographiques *(x, y, z)* du point quelconque A, et d'une pluralité de paramètres propres à la géométrie du champ d'observation et au dispositif de prise de vues.

Le modèle mathématique $\mathfrak{M}$ repose sur onze paramètres de transformation $m_{ij}$. Les paramètres de transformation $m_{ij}$ comprennent d'une part des paramètres dépendant de la scène en 3D *W*, par exemple la position du dispositif de prise de vues par rapport au repère géographique *(O, X, Y, Z)*. D'autre part, des paramètres dépendants du dispositif de prise de vues, par exemple sa distance focale.

Les onze paramètres de transformation $m_{ij}$ peuvent être établis par la connaissance des coordonnées géographiques $(x_n, y_n, z_n)$ et des coordonnées image $(i_n, j_n)$ respectives d'un nombre *N* de points particuliers (*n* étant un nombre entier allant de 1 à *N*).

En ayant défini un nombre *N* de points particuliers, le modèle mathématique s'écrit sous la forme matricielle à *2N* équations (2) :

$$
\begin{pmatrix}
& & & & & \vdots & & & & & \\
x_n & y_n & z_n & 1 & 0 & 0 & 0 & 0 & -i_n \cdot x_n & -i_n \cdot y_n & -i_n \cdot z_n \\
0 & 0 & 0 & 0 & x_n & y_n & z_n & 1 & -j_n \cdot x_n & -j_n \cdot y_n & -j_n \cdot z_n \\
& & & & & \vdots & & & & &
\end{pmatrix}
\begin{pmatrix}
m_{1,1} \\ m_{1,2} \\ m_{1,3} \\ m_{1,4} \\ m_{2,1} \\ m_{2,2} \\ m_{2,3} \\ m_{2,4} \\ m_{3,1} \\ m_{3,2} \\ m_{3,3}
\end{pmatrix}
=
\begin{pmatrix}
\vdots \\ \vdots \\ \vdots \\ i_n \\ j_n \\ \vdots \\ \vdots
\end{pmatrix}
\quad (2)
$$

La connaissance des coordonnées géographiques $(x_n, y_n, z_n)$ et des coordonnées images $(i_n, j_n)$ des *N* points particuliers est obtenue par des mesures expérimentales. A cet effet, on agence *N* points de référence dans la scène en 3D *W*. Un minimum de six points de référence est nécessaire pour établir le modèle mathématique. En effet chaque point de référence permet d'écrire deux équations. On obtient donc douze équations pour résoudre un système à onze inconnues $m_{i,j}$.

Puis les paramètres de transformation $m_{i,j}$ sont calculés par correspondance des coordonnées géographiques $(x_n, y_n, z_n)$ des *N* points de référence avec leurs coordonnées images $(i_n, j_n)$ respectives.

Cependant, la nature expérimentale du procédé de détermination entraîne une variation des paramètres de transformation due à une variation des paramètres dépendants de la scène en 3D W. Par exemple le dispositif de prise de vue peut changer de position sous l'effet du vent. La distance des objets géographiques au dispositif de prises de vues, l'imperfection de ce dispositif de prise de vues peut également augmenter l'imprécision et une variation des paramètres de transformation dépendants de la scène en 3D.

Par conséquent, on détermine des coordonnées géographiques références $(x_{n0}, y_{n0}, z_{n0})$ pour chacun des *N* points de référence, et des coordonnées images références $(i_{n0}, j_{n0})$ pour chacun des *N* points particuliers. Ces coordonnées références seront utilisées comme étalons pour les mesures suivantes.

Les coordonnées géographiques références $(x_{n0}, y_{n0}, z_{n0})$ de ces points de référence sont mesurées lors d'une étape de référencement. Les coordonnées images références $(i_{n0}, j_{n0})$ respectives sont obtenues à partir d'images de référence capturées par le dispositif de prise de vues lors de l'étape de référencement.

Le modèle mathématique $\mathcal{M}$ permet donc de calculer des coordonnées images $(i, j)$ à partir de coordonnées géographiques $(x, y, z)$. Pour pouvoir calculer des coordonnées géographiques $(x, y, z)$ à partir de coordonnées images $(i, j)$, il suffit de calculer l'inversion du modèle mathématique $\mathcal{M}^{-1}$.

Par conséquent, en ayant d'une part les coordonnées images $(i, j)$ de la surface d'eau, établies grâce à la colorimétrie des pixels et détectées sur le ou les support(s) visuel(s), et d'autre part l'inversion du modèle mathématique permettant de calculer les coordonnées géographiques $(x, y, z)$ de la hauteur du niveau de la surface d'eau à partir des coordonnées images $(i, j)$ de la surface d'eau grâce à la connaissance des coordonnées géographiques du ou des support(s) visuel(s), on peut calculer le niveau de la surface d'eau en unités métriques.

Le procédé permet de calculer conjointement les coordonnées de points sur le support visuel pour des mesures de hauteur, et les coordonnées de points sur la surface d'eau pour des estimations de vitesse de surface.

**b. Mesure de vitesses de surface**

Afin de mesurer les vitesses de surface de la surface d'eau on utilise de préférence la Vélocimétrie par Imagerie de Particules ou PIV (« Particle Image Velocimetry » en langue anglaise) En effet, la PIV présente un temps de calcul très court et facilite le développement d'algorithme de traitement d'image. De plus, la PIV offre une bonne précision de mesure. Cette méthode est donc performante et facile à mettre en oeuvre.

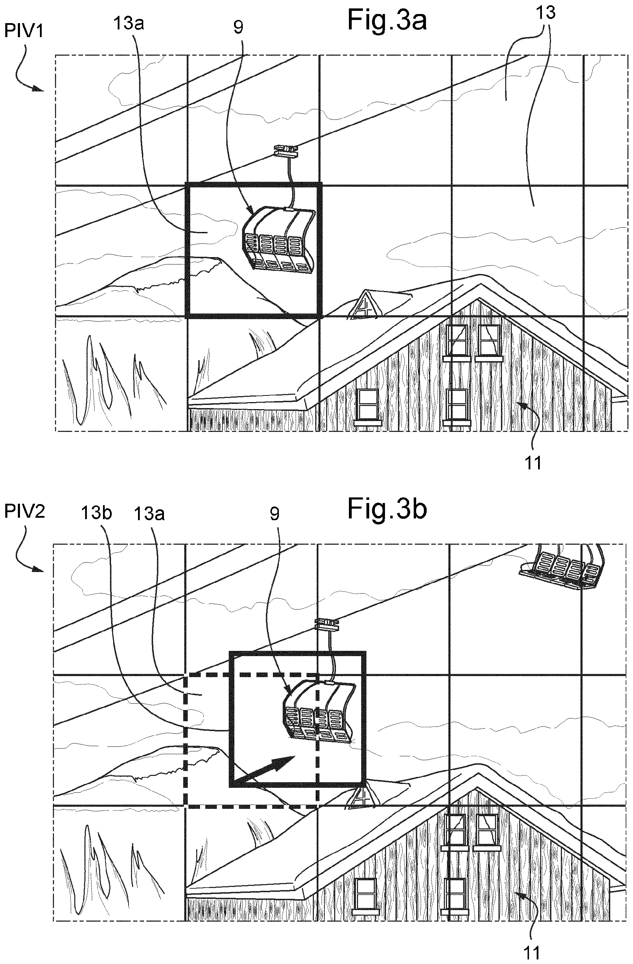

Le principe de la PIV est illustré par les figures 3a et 3b. Le principe de la PIV consiste à estimer le déplacement des différentes zones 9, 11 apparentes sur des images en établissant une corrélation croisée entre ces images. Pour cela, une première image de PIV *PIV1* et une deuxième image de PIV *PIV2* sont capturées à intervalle de temps court par exemple 0,5 seconde.

La première image de PIV *PIV1* est découpée en portions nommées fenêtres 13 qui sont représentées par les carrés en traits pleins sur la figure 3a. Sur la première image de PIV *PIV1* apparaissent des zones mouvantes 9, par exemple le télésiège, qui sur la deuxième image de PIV *PIV2,* représentée par la figure 3b, se sont déplacées. Sur la première image de PIV *PIV1* et la deuxième image de PIV *PIV2* apparaissent aussi des zones fixes 11, telles que la montagne et le chalet.

La technique de PIV mesure les déplacements en faisant « glisser » les fenêtres 13 de la première image de PIV *PIV1* sur des portions de mêmes dimensions que les fenêtres 13 de la deuxième image de PIV *PIV2.* Tous les déplacements sont envisagés. On entend par « glisser » faire correspondre les fenêtres 13 de la première image de PIV *PIV1* sur des portions de la deuxième image de PIV *PIV2* de même taille.

Ceci est représenté par le déplacement de la zone mouvante 9 entre les figures 3a et 3b. Une fenêtre exemple 13a de la première image de PIV *PIV1* contient le télésiège entier. La fenêtre exemple 13a apparaît en traits gras sur la figure 3a. Sur la deuxième image de PIV *PIV2,* le télésiège n'est plus entièrement compris dans la fenêtre exemple 13a, maintenant représentée en pointillés. La PIV recherche alors une partie de la deuxième image de PIV *PIV2* de même dimension que la fenêtre exemple 13a de la première image de PIV *PIV1* et contenant un maximum d'informations communes à la fenêtre exemple 13a. C'est-à-dire dans le cas de l'exemple, la PIV recherche la partie de la deuxième image de PIV *PIV2* contenant le télésiège.

Pour cela, la PIV compare l'information contenue dans la fenêtre exemple 13a de la première image de PIV *PIV1* avec la totalité de la deuxième image de PIV *PIV2.*

Selon une forme de réalisation, le contenu commun d'informations est quantifié par un calcul de corrélation. Plus une partie de la deuxième image de PIV *PIV2* contient d'informations communes avec la fenêtre exemple 13a, et plus la valeur de la corrélation entre la fenêtre exemple 13a et cette partie de la deuxième image de PIV *PIV2* est élevée.

Selon une autre forme de réalisation, un calcul de la somme des écarts au carré peut être réalisé à la place de la corrélation.

La fenêtre résultat 13b en trait plein correspond à la partie de la deuxième image de PIV *PIV2* ressemblant le plus à la fenêtre exemple 13a. Le déplacement est exprimé par un vecteur de déplacement représenté par une flèche sur la figure 3b.

Cette opération est répétée pour toutes les fenêtres 13 découpées dans la première image de PIV *PIV1* afin de définir un champ de déplacements dont la densité dépend du nombre de fenêtres 13. La vitesse de déplacement de chaque fenêtre 13 est déduite de la connaissance du temps séparant la prise de vue de la première image de PIV *PIV1* et la prise de vue de la deuxième image de PIV *PIV2.*

On décrit à présent le procédé de détermination. Le procédé de détermination comprend une phase de référencement lors de laquelle on acquiert des données qui seront par la suite utilisées pour établir le modèle mathématique $\mathcal{M}$.

Le procédé de détermination comprend aussi une phase d'observation lors de laquelle les paramètres d'ob-

servation de la surface d'eau sont déterminés.

## 2. *E1 :* **Phase de référencement**

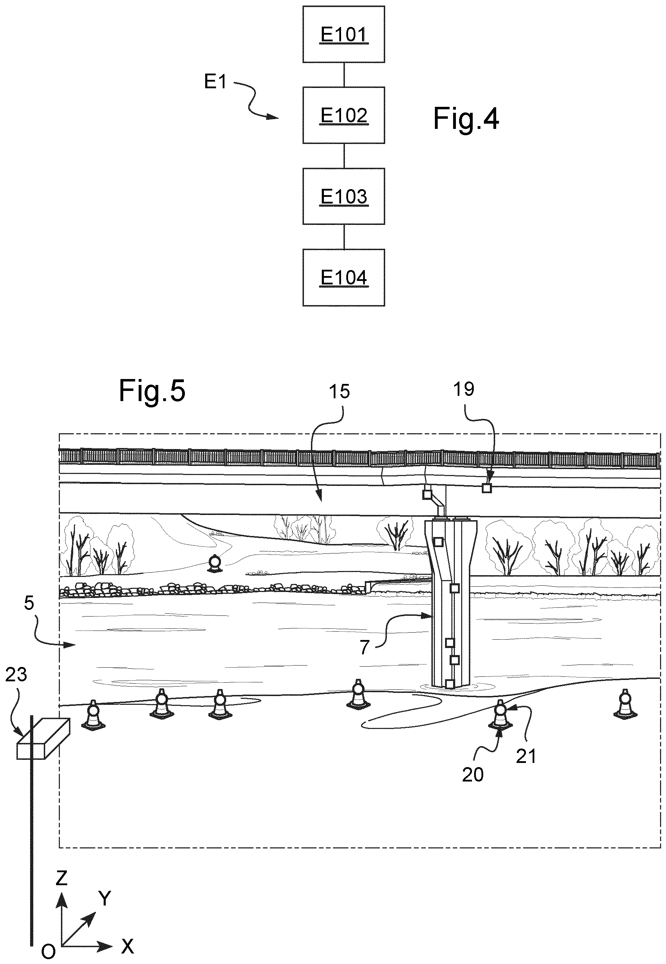

La phase de référencement *E1* a lieu avant la phase d'observation *E2*. La phase *E1* de référencement comprend une pluralité d'étapes schématisée par la figure 4.

a. Le site d'observation

On se réfère à la figure 5. Le site d'observation comprend une surface d'eau 5, au moins une structure permanente 15, par exemple une structure préexistante sur le site tel qu'un pont, ou une station de mesure, et au moins un support visuel 7 partiellement immergé dans la surface d'eau 5.

Selon une forme de réalisation, si la structure permanente 15 est partiellement immergée dans la surface d'eau 5 et si sa forme est facilement reconnaissable, alors ladite structure permanente 15 peut être utilisée comme support visuel 7, par exemple un pilier de pont partiellement immergé peut servir de support visuel 7.

Selon une autre forme de réalisation, le support visuel 7 peut être distinct de la structure permanente 15, par exemple une mire normalisée par les services hydrométriques de l'Etat.

Selon une autre forme de réalisation, on peut utiliser une pluralité de supports visuels 7 placés à différentes hauteurs. De cette façon, si un support visuel 7 placé à basse hauteur est submergé par la surface d'eau 5, il est possible de continuer les mesures en utilisant un support visuel 7 plus haut placé.

b. *EI01 :* Placement de points de référence 19,21

Lors d'une étape *EI01* de placement de points de référence 19,21, on place des points de référence ou on choisit des points des références présents 19,21 sur le site à surveiller.

Plus les points de référence 19,21 sont nombreux et répartis dans la scène et plus le modèle mathématique donne des résultats précis et/ou robustes. En effet en disposant d'un grand nombre de coordonnées géographiques et des coordonnées images respectives on réduit l'incertitude sur le positionnement de chaque point de référence 19,21 considéré individuellement.

Le modèle mathématique donne des résultats d'autant plus précis qu'un objet dont on cherche à déterminer les coordonnées se trouve à proximité d'un point de référence 19, 21. On repartit donc les points de référence 19,21 sur une large zone géographique. De plus, afin que la profondeur du site d'observation soit prise en compte, il faut placer au moins un point de référence 19,21 à une distance du dispositif de prise de vue sensiblement différente de la distance du reste des points de référence 19,21. Par exemple on peut placer un point de référence 19, 21 sur la rive opposée de la surface d'eau 5.

Les points de référence 19,21 sont agencés d'une part sur la structure permanente 15 et sur le support visuel 7, et d'autre part à distance de ladite structure permanente 15 ou dudit support visuel 7.

Les points de référence placés ou présents sur la structure permanente 15 ou sur le support visuel 7 sont appelés points de référence matériels 19 car leur position géographique présente une correspondance avec un objet matériel. Ces points de référence matériels 19 sont agencés sur des parties «facilement » distinguables de la structure permanente 15. Par « facilement » distinguables, est entendu que le point de référence matériel 19 est représenté par un pixel présentant une forte variation colorimétrique avec les pixels adjacents. Par exemple, les points de référence matériels 19 peuvent être agencés sur un coin de toiture, une arrête d'un mur ou d'une barrière. Une fois le géoréférencement achevé, un nombre suffisant de points de référence matériels 19 seront toujours distinguables. De plus, les points de référence matériels sont agencés sur des structures permanentes 15 supposées immobiles. Ainsi, leur position et par conséquent leurs coordonnées géographiques sont supposées invariantes dans le temps.

Placer des points de référence matériels 19 sur le support visuel 7 permet de connaître avec précision les coordonnées géographiques et les coordonnées images dudit support visuel 7, et ainsi d'obtenir des estimations de niveau de la surface d'eau 5 précises.

Les points de référence placés à distance de la ou des structure(s) permanente(s) 15 sont appelés points de référence immatériels 21. Les points de référence immatériels 21 sont ainsi nommés car contrairement aux points de référence matériels 19, ils ne sont pas associés à une structure permanente 15. Les points de référence immatériels 21 peuvent par exemple être répartis de part et d'autre de la surface d'eau 5, par exemple sur les berges de la surface d'eau 5. Les points de référence immatériels 21 peuvent aussi être placés dans le lit de la surface d'eau 5 quand celui-ci est bas.

Afin de faire apparaître les points de référence immatériel 21 le temps du géoréférencement et du référencement image, on indique pour chaque point immatériel 21 sa position sur le site à surveiller grâce à une structure temporaire 20 qui sera retirée une fois la phase de référencement achevée. La structure temporaire peut par exemple comprendre une balise 20.

c. *E102 :* Détermination des coordonnées géographiques références *(x_{n0}, y_{n0}, z_{n0})* des points de référence 19,21

Lors d'une étape *E102,* on géoréférence les points de référence 19,21 c'est-à-dire on détermine les coordonnées géographiques références *(x_{n0}, y_{n0}, z_{n0})* des points de référence 19,21 dans un système de coordonnées.
Le dispositif utilisé pour le géoréférencement est de préférence le théodolite car il permet des mesures rapides et précises. D'autres dispositifs sont envisageables pour le géoréférencement, par exemple le GPS (Global Positioning System) ou le lidar.
Dans le cas de l'utilisation d'un théodolite (non représenté), la mesure consiste à placer une cible réfléchissante sur chaque point de référence 19, 21 à géoréférencer. Le théodolite émet une onde lumineuse qui est réfléchie par les cibles réfléchissantes. Le déphasage entre l'onde lumineuse émise par le théodolite et l'onde lumineuse réfléchie par la cible réfléchissante permet de mesurer la distance entre le théodolite et la cible réfléchissante.
On définit un repère géographique *(O, X, Y, Z).* Par exemple on définit un axe *(OX)* horizontal selon le sens de l'écoulement de la surface d'eau, un axe *(OZ)* vertical ; et un axe *(OY)* orienté d'une rive de la surface d'eau à l'autre.
A partir de mesures de distances entre les cibles réfléchissantes et le théodolite dans le repère géographique *(O, X, Y, Z),* on peut déduire les coordonnées géographiques références *(x_{n0}, y_{n0}, z_{n0})* des points de référence 19,21.
Selon une forme de réalisation préférentielle, la position d'un point de référence matériel 19 et la position d'un point de référence immatériel 21 sont indiquées en même temps sur le site à observer, et leurs coordonnées géographiques références *(x_{n0}, y_{n0}, z_{n0})* respectives sont géoréférencées. Cette forme de réalisation nécessite donc autant de structures temporaires 20 que de points de référence immatériels 21. Par exemple on peut géoréférencer dix points de référence immatériels 21 dans le lit de la surface d'eau 5.
Selon une autre forme de réalisation, la position des points de référence matériel 19 est indiquée dans un premier temps, et leurs coordonnées géographiques références *(x_{n0}, y_{n0}, z_{n0})* respectives sont géoréférencées. Puis dans un deuxième temps, par exemple après plusieurs jours, la position des points de référence immatériels est indiquée grâce à une structure temporaire 20. Cette forme de réalisation nécessite donc aussi autant de structures temporaires 20 que de points de référence immatériels 21.
Une autre forme de réalisation, diffère des deux autres formes de réalisation en ce qu'on géoréférence les points de référence immatériels 21 un par un. Dans ce cas, on utilise une seule structure temporaire 20 que l'on déplace afin d'indiquer la position de chaque point de référence immatériel 21.

d. *E103 :* Capture d'une image référence

Une image référence du site d'observation contenant tous les points de référence matériels 19 et immatériels 21 peut ensuite être capturée par le dispositif de prise de vues 23 lors d'une étape *E103* de capture d'image référence.
Dans le cas où tous les points de référence immatériels 21 ont été balisés en même temps, le dispositif de prise de vues 23 capture une image référence unique présentant tous les points de référence matériels 19 et immatériels 21.
Dans le cas où les points de référence immatériels 21 ont été indiqués séparément des points de référence matériels 19, le dispositif de prise de vues 23 capture d'une part une image référence présentant seulement les points de référence matériels 19. D'autre part, le dispositif de prise de vue 23 capture une image de référence supplémentaire à chaque fois que la position d'un point de référence immatériel 21 est indiqué par une structure temporaire 20.
Si la position de chaque point de référence immatériel 21 a été indiquée au même moment, alors au final on dispose d'une première image de référence et d'une image de référence supplémentaire.
Si la position de chaque point de référence immatériel 21 est indiquée l'une après l'autre, alors au final on dispose d'une première image de référence et d'autant d'images de référence supplémentaires que de points de référence immatériels 21.

e. *E104 :* Détermination des coordonnées images références *(i_{n0}, j_{n0})* des points de référence 19,21

Lors d'une étape *E104* de détermination des coordonnées images références *(i_{n0}, j_{n0})* des points de référence 19,21, l'utilisateur détermine manuellement ou automatiquement les coordonnées images références *(i_{n0}, j_{n0})* présentées par les points de référence matériels 19 et immatériels 21 pendant la phase de référencement. Pour cela l'utilisateur ou un algorithme de traitement détermine et enregistre le numéro référence de ligne et le numéro référence de colonne correspondant respectivement à chacun des points de référence matériels 19 et immatériels 21.
Dans le cas où l'utilisateur dispose d'une unique image référence présentant tous les points de référence matériels 19 et immatériels 21, alors l'utilisateur peut déterminer les coordonnées images références *(i_{n0}, j_{n0})* de tous les points de référence matériels 19 et immatériels 21 à partir de cette unique image référence.

Dans le cas où l'utilisateur dispose d'une première image référence présentant seulement les points de référence matériels 19, et d'une image de référence supplémentaire présentant tous les points de référence immatériels 21, alors il détermine les coordonnées images références $(i_{n0}, j_{n0})$ de tous les points de référence matériels 19 à partir de cette première image de référence. Les coordonnées images références $(i_{n0}, j_{n0})$ des points de référence immatériels 21 sont déterminées à partir de l'image de référence supplémentaire. Les coordonnées des points de référence matériel et immatériels sont exprimées dans un même système de coordonnées images par repositionnement manuel ou automatique des deux images de référence.

Dans le cas où l'utilisateur dispose d'une pluralité d'images de référence supplémentaires chacune représentant un point de référence immatériel 21, les coordonnées images références $(i_{n0}, j_{n0})$ des points de référence immatériels 21 sont respectivement déterminées à partir des images de référence supplémentaires. Les coordonnées des points de référence matériel et immatériels sont exprimées dans un même système de coordonnées images par repositionnement manuel ou automatique de toutes les images de référence.

Les coordonnées géographiques références $(x_{n0}, y_{n0}, z_{n0})$ et les coordonnées images références $(i_{n0}, j_{n0})$ établies lors de la phase de référencement sont ensuite utilisées pour l'exploitation de toutes les images subséquentes. L'utilisation des structures temporaires 20 pour indiquer la position de points de référence immatériels 21 permet d'augmenter le nombre de points de référence 19, 21 et permet ainsi d'obtenir des résultats plus précis et/ou plus robustes.

### 3. *E2* : Phase d'observation

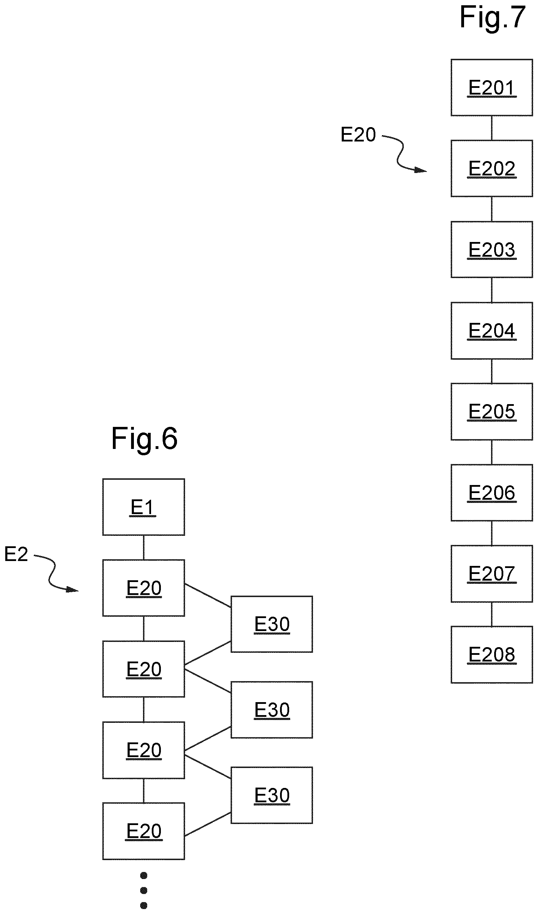

La phase *E2* d'observation débute après la phase *E1* de référencement, comme schématisée sur la figure 6. La phase d'observation comprend une étape *E20* de détermination du niveau de la surface d'eau et une étape *E30* de détermination de vitesses de surface de la surface d'eau.

Pour cela, la phase d'observation *E2* utilise les coordonnées géographiques références $(x_{n0}, y_{n0}, z_{n0})$ et les coordonnées images références $(i_{n0}, j_{n0})$ respectives des points de référence matériels 19 et immatériels 21 déterminées lors de la phase *E1* de référencement.

La phase E2 d'observation est automatisée grâce à la création d'algorithmes permettant de mener à bien toutes les étapes qui vont maintenant être décrites.

#### a. *E20* : Mesure du niveau de surface d'eau

L'étape *E20* de mesure du niveau de la surface d'eau comprend une pluralité d'étapes schématisée sur la figure 7.

#### • *E201 :* Capture d'une image d'observation

Lors d'une étape E201 de capture d'image d'observation, le dispositif de prise de vues capture une image d'observation du site à surveiller. Le niveau de la surface d'eau 5 est déterminé à partir d'une seule image d'observation tel que sera détaillé par la suite.

#### • *E202 :* Transmission des données

Lors d'une étape *E202* de transmission de données, l'image d'observation capturée est transmise afin d'être traitée.

Selon une forme de réalisation, l'image d'observation capturée par le dispositif de prise de vues est transmise en temps réel à une unité où le traitement des images d'observation sera effectué.

La transmission de l'image d'observation peut être réalisée par internet grâce à une connexion Wifi ou filaire. La transmission peut aussi être effectuée via le réseau téléphonique. La transmission peut aussi être effectuée via un ordinateur placé sur site et connecté au dispositif de prises de vues.

Selon une autre forme de réalisation l'image d'observation est mise en mémoire dans une mémoire du dispositif de prise de vues, et est récupérée par un utilisateur se déplaçant sur le site d'observation.

Dans le cas de la transmission en temps réel, l'image peut aussi être enregistrée dans la mémoire du dispositif.

#### • *E203 :* Détection des déplacements de l'image d'observation

Sous l'effet de contraintes extérieures, par exemple le vent ou les manipulations d'un utilisateur, la position du dispositif de prise de vues peut changer d'une image d'observation à l'autre. Par conséquent les objets du site peuvent sembler se déplacer alors qu'ils restent en réalité immobiles, et leur position sur l'image d'observation peut être faussée. La détection et la quantification de ces déplacements sont nécessaires afin de pouvoir recalculer les paramètres du

modèle mathématique $\mathcal{M}$ et de minimiser l'erreur dans l'estimation du niveau de la surface de la surface d'eau 5.

Comme dit précédemment, on suppose que les points de référence matériels 19, sont immobiles dans le repère géographique *(O, X, Y, Z)*, contrairement à leurs correspondants dans le repère image *(O ; I, J)*. Les coordonnées géographiques *($x_n$, $y_n$, $z_n$)* des points de référence matériels 19 restent donc toujours égales aux coordonnées géographiques références *($x_{n0}$, $y_{n0}$, $z_{n0}$)*. Au contraire, les coordonnés images d'observation *($i_n$, $j_n$)* des points de référence matériels 19 varient sur chaque image d'observation par rapport aux coordonnées images références *($i_{n0}$, $j_{n0}$)* des mêmes points de référence matériels 19 déterminées lors de la phase de référencement.

Le modèle mathématique $\mathcal{M}$ doit donc être calculé pour chaque image d'observation. Pour cela, on mesure le déplacement des points de référence matériels 19 et du support visuel 7 d'une image d'observation à l'autre.

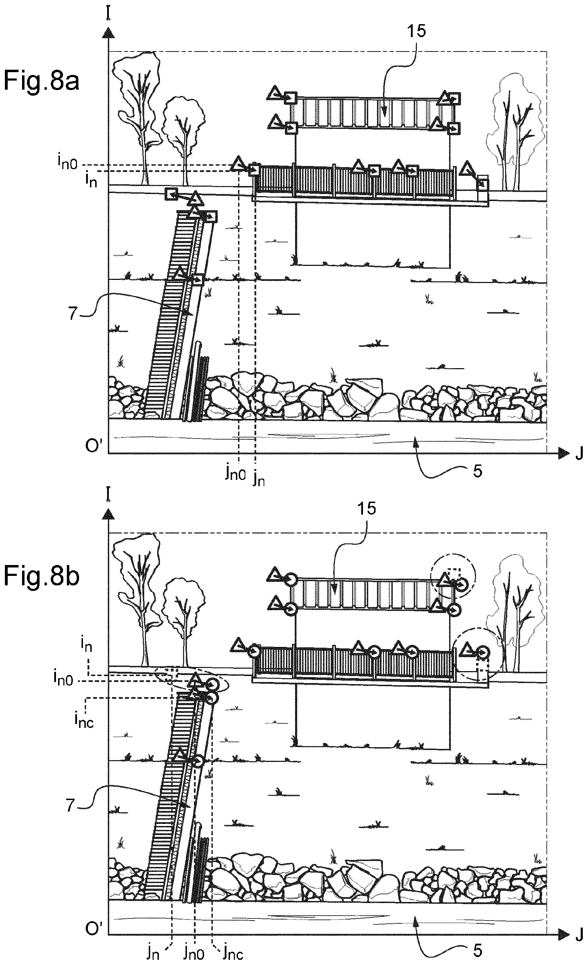

Ce déplacement est illustré par la figure 8a. La figure 8a représente une image d'observation sur laquelle la position référence définie par les coordonnées images références *($i_{n0}$, $j_{n0}$)* sur l'image référence des points de référence matériels 19 est indiquée par des triangles. On emploie le terme image de référence pour l'image capturée lors de la phase de référencement comprenant tous les points de référence matériels 19. Selon la forme de réalisation du procédé, on utilise soit l'unique image de référence, soit la première image de référence. La position d'observation définie par les coordonnées images d'observation *($i_n$, $j_n$)* sur l'image d'observation des points de référence matériels 19 est indiquée par des carrés. Le déplacement des points de référence matériels 19 entre l'image de référence et l'image d'observation est indiqué par des flèches.

On cherche les coordonnées images d'observation *($i_n$, $j_n$)* des points de référence matériels 19 sur l'image d'observation.

A cet effet, on applique la même méthode de corrélation que la PIV précédemment décrite. On découpe l'image référence ainsi que l'image d'observation en une pluralité de fenêtres. Par exemple des carrés de 32x32 pixels. Puis, pour chaque fenêtre de l'image référence contenant au moins un point de référence matériel 19, l'algorithme recherche dans l'image d'observation, la fenêtre lui ressemblant le plus, c'est-à-dire présentant la meilleure corrélation.

Bien entendu, cette opération ne peut pas utiliser les points de référence immatériels 21 car les structures temporaires 20 ont été retirées du site d'observation. En effet, à ce stade du procédé de détermination, les points de référence immatériels 21 n'ont plus de correspondants distinguables dans le site à observer. On ne peut donc pas calculer leur déplacement par rapport à l'image référence.

On répète la PIV pour tous les points de référence matériels 19, on obtient ainsi le déplacement individuel de chaque point de référence matériel 19.

Tous les points de référence matériels 19 ne sont pas reconnus avec la même qualité dans l'image d'observation. En conséquence, la valeur de la corrélation n'est pas la même selon les points de référence, cela peut être dû à des contraintes climatiques particulières, comme l'apparition de brouillard, de zones d'ombre, ou si le point de référence matériel 19 est temporairement masqué.

Pour cette raison, la valeur de la corrélation entre la position référence et la position d'observation des points de référence matériels 19 est comparée à un seuil préalablement fixé. Si la valeur de la corrélation calculée est inférieure à ce seuil, alors le point de référence matériel 19 n'a pas été bien reconnu. Si la valeur de la corrélation calculée est supérieure ou égale à ce seuil, alors le point de référence matériel a bien été reconnu. Ce seuil minimum de corrélation a été fixé à 0,7.

Puis un déplacement global de l'image d'observation est identifié. Le déplacement global correspond au déplacement individuel commun à une majorité de points de référence matériels 19, c'est à dire le déplacement le plus fréquemment observé, parmi les points de référence matériels 19 présentant une corrélation supérieure ou égale au seuil minimum de corrélation.

Si la corrélation des points de référence matériels est inférieure au seuil minimum de corrélation, alors le déplacement global n'est pas calculé pour cette image d'observation. On peut alors utiliser le déplacement global établi pour une précédente image d'observation.

Tolérer les mouvements possibles du dispositif de prises de vues 23 dans le protocole expérimental puis les corriger lors du traitement des images d'observation, permet de relâcher les contraintes physiques sur le dispositif de prise de vues 23 et rend ainsi le procédé de détermination plus simple à mettre en oeuvre.

Selon une autre forme de réalisation, le procédé de détermination impose que le dispositif de prise de vues 23 reste parfaitement immobile entre la capture de l'image référence et la capture de l'image d'observation.

• E204 : Correction du déplacement de l'image d'observation

Lors d'une étape E204 de correction du déplacement de l'image d'observation, une correction est appliquée aux points de référence 19, 21. La correction consiste à déterminer des coordonnées images corrigées *($i_{nc}$, $j_{nc}$)* des points de référence, de sorte que tous les points de référence 19, 21 aient subi le même déplacement global entre l'image de référence et l'image d'observation. La figure 8b illustre le déplacement global identifié. Sur cette figure, la position référence des points de référence matériels 19 définie par les coordonnées images références $(i_{n0}, j_{n0})$ est indiquée par un triangle. Les flèches représentent le déplacement global de l'image d'observation par rapport à l'image référence. Les cercles représentent les positions corrigées définies par les coordonnées images corrigées $(i_{nc}, j_{nc})$ des points de référence matériels 19 calculées grâce au déplacement global. Les carrés en pointillés représentent les positions observation définies par les coordonnées d'observation $(i_n, j_n)$ détectées sur l'image d'observation. Les points de référence matériels 19 pour lesquels le déplacement individuel avait fourni de mauvaises positions sur l'image d'observation sont encerclés.

• E205 : Détermination du modèle mathématique.

Lors d'une étape E205 de détermination du modèle mathématique, on établit le modèle mathématique permettant le passage du repère géographique *(O, X, Y, Z)* au repère image dans l'image d'observation *(O', I, J).*

En effet, connaissant d'une part les coordonnées géographiques des points de référence matériels 19 et immatériels 21, supposées invariantes et coordonnées images références $(i_{n0}, j_{n0})$, et d'autre part, leurs coordonnées images d'observation $(i_n, j_n)$ et la correction à appliquer à ces coordonnées d'observation $(i_n, j_n)$, il est possible de déterminer les coefficients $m_{i,j}$ du modèle mathématique

• E206 : Correction de la position du support visuel 7

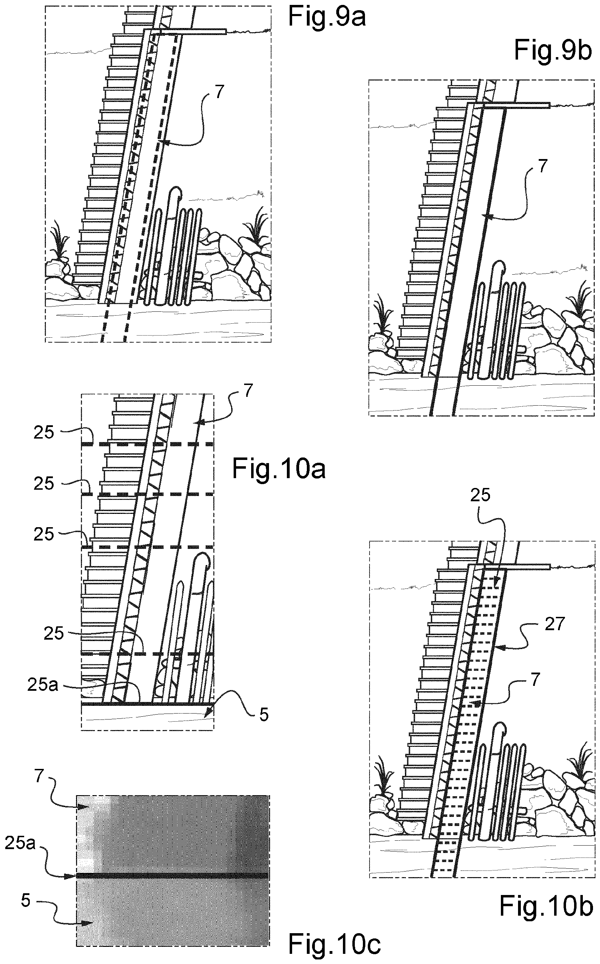

Lors d'une étape E206 de correction de la position du support visuel 7, on corrige la position du support visuel 7. Pour cela, on calcule la position image du support visuel 7 dans l'image d'observation. Ceci est illustré par les figures 9a, 9b.

La figure 6a représente une partie de l'image d'observation telle que capturée par le dispositif de prise de vues.

Le support visuel ayant été géoréférencé lors de la phase de référencement, on utilise le déplacement global pour trouver sa position image en première approximation. Cette position image en première approximation est indiquée en pointillés sur la figure 9a.

Afin de déterminer la position améliorée image du support visuel 7 c'est-à-dire avec plus de précision, on effectue ensuite une analyse colorimétrique des pixels voisins aux pixels déterminant la position image en première approximation du support visuel 7. Par exemple une zone de plus au moins cinq pixels autour de la position du support visuel 7 en première approximation est analysée. Le support visuel 7 a une couleur distinguable de celle de son environnement voisin. L'analyse comprend de préférence le calcul d'une pluralité de gradients de couleur entre pixels adjacents. L'analyse comprend de plus une comparaison de la pluralité de gradients de couleur ainsi qu'une sélection des gradients de couleur maximum. Les gradients de couleur maximum permettent d'identifier les contours du support visuel 7. La sélection des gradients maximums permet de s'affranchir de la définition d'un seuil de variation colorimétrique pour la mise en évidence des contours du support visuel 7.

La position améliorée image est indiquée en traits pleins sur la figure 9b.

Selon une autre forme de réalisation, on capture une image d'observation en niveau de gris, et on calcule des gradients de luminosité.

• E207 : Détermination de l'intersection 25a entre le support visuel 7 et la surface d'eau 5

Puis on détermine l'intersection entre le support visuel 7 et la surface d'eau 5 lors d'une étape E207 de détermination de l'intersection 25a entre le support visuel 7 et la surface d'eau 5.

La recherche de la position du niveau de la surface d'eau 5 sur l'image d'observation se déroule en deux étapes : une étape de détermination d'une pluralité d'intersections possibles 25 entre le support visuel 7 et la surface d'eau 5, et une étape de choix final de l'intersection réelle 25a. Ces deux étapes sont illustrées par les figures 10a, 10b, 10c.

L'étape de détermination d'une pluralité d'intersections possibles 25 est illustrée par la figure 10a. Cette détermination est réalisée en analysant les discontinuités colorimétriques des pixels correspondant à la position améliorée image du support visuel 7.

Il a été déterminé expérimentalement que la caractéristique colorimétrique permettant la meilleure prise en compte des variations lumineuses est la Saturation dans le codage HSV décrit précédemment. La Saturation décrit la « pureté » d'une couleur, c'est-à-dire l'écart de blanc par rapport à la Teinte de base d'un pixel. C'est donc, de préférence, la Saturation des pixels de l'image d'observation qui est utilisée dans l'estimation du niveau de la surface d'eau 5.

Selon une autre forme de réalisation, on utilise la Teinte ou la Luminance du codage HSV.

Selon encore une autre forme de réalisation, on utilise le codage RGB.

Dans de bonnes conditions d'observation, cette intersection réelle 25a est représentée par une discontinuité colorimétrique entre les pixels « couleur support visuel » et les pixels « couleur surface d'eau ». Il est donc suffisant de rechercher la modification de la couleur sur le support visuel 7. Par bonnes conditions, on comprend de bonnes conditions lumineuses et un support visuel 7 dégagé.

Cependant, dans la plupart des cas, l'intensité de la discontinuité colorimétrique dépend des conditions lumineuses au moment de la capture de l'image d'observation. De plus, la présence possible d'objets, telle que des branches, des feuilles ou de la neige sur le support visuel 7 font apparaître de nouvelles discontinuités colorimétriques. La détection de discontinuité colorimétrique n'est donc pas suffisante pour estimer le niveau de la surface d'eau 5.

Ces intersections possibles 25 sont illustrées par des traits horizontaux en pointillés sur la figure 10a.

La détection de discontinuité colorimétrique n'est donc pas suffisante pour estimer le niveau de la surface d'eau 5.

Lors de l'étape de choix final, on identifie la position de l'intersection réelle 25a.

A cet effet, on détermine les contours 27 du support visuel 7 représentés en traits plein sur la figure 10b. En effet la forme du support visuel 7 est connue et reconnaissable par l'algorithme quelles que soient les conditions lumineuses ou l'état de recouvrement du support visuel 7 par des objets. Sur les figures illustrant le procédé de détermination, le support visuel 7 présente la forme d'un parallélogramme.

Selon d'autres modes de réalisation, on utiliser un support visuel 7 présentant une autre forme.

Afin de déterminer les contours 27 du support visuel 7, on calcule les gradients d'une pluralité de caractéristiques colorimétriques des pixels représentant le support visuel 7 ainsi que des pixels voisins du support visuel 7. Les caractéristiques colorimétriques comprennent la Saturation, la Teinte et la Norme. On peut utiliser une combinaison des caractéristiques colorimétriques afin d'augmenter la précision des résultats Pour calculer les gradients, on convolue l'image d'observation ou une partie de celle-ci englobant le ou les supports visuels avec des masques, tels que les masques de Sobel ou Prewitt permettant encore d'améliorer la précision sur la position améliorée image du support visuel 7.

En utilisant ces gradients adaptés à la forme du support visuel 7, il est possible de détecter la disparition des contours 27 du support visuel 7 lorsque le support visuel 7 entre dans la surface d'eau 5. Parmi les intersections possibles 25, celle correspondant à la disparition des contours 27 du support visuel 7, est donc définie comme étant l'intersection réelle 25a. L'intersection réelle 25a est indiquée sur la figure 10c par un trait plein sensiblement horizontal.

• E208 : Calcul du niveau de la surface d'eau 5

Enfin, le niveau de la surface d'eau 5 est calculé lors d'une étape E208 de calcul du niveau de la surface d'eau 5. Pour cela, on mesure la distance en pixels entre le sommet immergé du ou des support(s) visuel(s) 7 dont on a identifié les positions géographiques, et la surface de la surface d'eau 5. Cette distance en pixels est ensuite convertie en unités métriques en inversant le modèle mathématique $\mathcal{M}$ calculé pour l'image d'observation.

b. *E30 :* **Détermination des vitesses de surface**

Lors de l'étape *E30* de détermination des vitesses de surface, les vitesses de surface de la surface d'eau peuvent être déterminées grâce à la PIV (vélocimétrie par imagerie de particules). On note qu'il n'y a pas une seule vitesse de surface uniforme sur toute l'étendue de la surface d'eau, mais plutôt une pluralité de vitesses de surfaces.

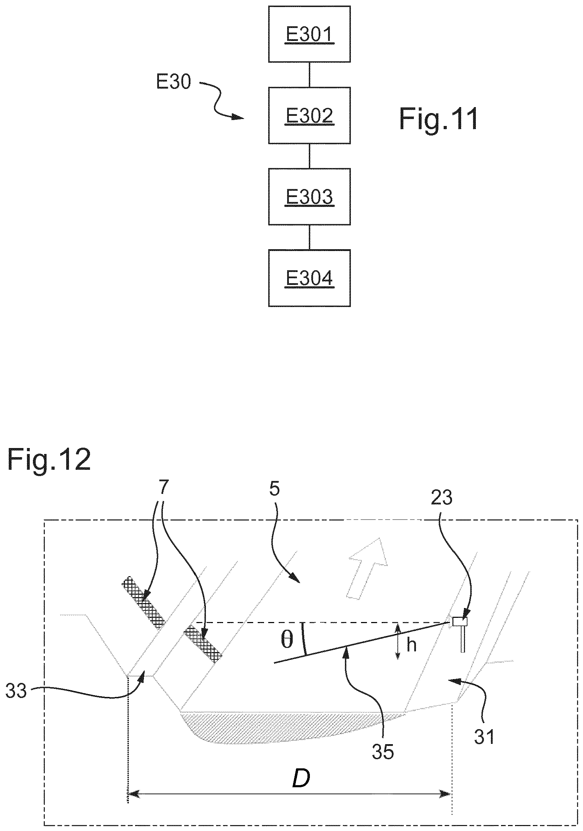

L'étape *E30* de détermination des vitesses de surface comprend une pluralité d'étapes, schématisée par la figure 11.

• Capture et calcul du niveau de la surface d'eau de deux images d'observation

La méthode PIV appliquée à la détermination de vitesses de surface de la surface d'eau 5 nécessite d'une part, deux images d'observation, et d'autre part de connaître le niveau de la surface d'eau 5 sur ces deux images d'observation. Il est donc possible de réaliser deux fois l'étape *E20* de détermination du niveau de surface d'eau 5 avant de pouvoir réaliser l'étape *E30* de détermination de vitesses de surface.

Selon une variante, on réalise une seule fois l'étape E20 compte tenu de la faible variation de niveau de la surface 5 dans le faible laps de temps séparant les deux images d'observation.

Pour estimer les vitesses de surface de la surface d'eau 5, la PIV va utiliser le déplacement de traceurs. On définit un traceur comme étant un objet en déplacement à la surface de l'eau 5. Chaque vitesse de surface de la surface d'eau 5 est assimilée à une vitesse de déplacement d'un traceur à la surface de l'eau 5. La plupart du temps les traceurs comprennent des vaguelettes à la surface de l'eau 5. Les vaguelettes sont perçues avec des couleurs différentes de la surface d'eau 5, puisqu'elles sont éclairées différemment. Les traceurs peuvent aussi comprendre des branches d'arbres ou des feuilles flottant à la surface de l'eau 5.

La vitesse de déplacement des traceurs est déduite de la connaissance du temps séparant la capture de la première image d'observation et la capture de la deuxième image d'observation.

• *E301* Création d'une image à l'échelle

Plus la distance entre un objet et le dispositif de prise de vues 23 est grande, et plus un pixel couvre une large surface du site à surveiller. En d'autres termes, un objet éloigné du dispositif de prise de vues 23 se déplaçant de par exemple deux pixels, se sera déplacé plus loin dans le monde réel qu'un objet proche de la caméra se déplaçant de deux pixels Cette augmentation est d'autant plus marquée que l'angle entre l'axe de visée du dispositif de prise de vues 23 et la surface d'eau 5 est faible.

La figure 12 schématise un dispositif de prise de vues 23 placé sur une rive droite 31 de la surface d'eau 5. La rive droite 31 et la rive gauche 33 sont déterminées par le sens de l'écoulement de la surface d'eau 5 qui est indiqué par une flèche.

Sur cet exemple, le dispositif de prise de vues 23 est fixé sur un trépied s'élevant à une hauteur h de 2m au-dessus du niveau de la surface d'eau (hors régime de crue). L'axe de visée 35, du dispositif de prise de vues 23 fait un angle θ très faible avec la surface d'eau, représenté en pointillé, ici de l'ordre de 5°. L'axe de visée 35 du dispositif de prise de vues 23 et la surface d'eau 5 sont donc sensiblement parallèles.

La distance *L* entre le dispositif de prise de vues 23 et le support visuel 7 est environ 80m. Dans ces conditions, les pixels représentatifs de la rive gauche 33 de la surface d'eau 5, c'est-à-dire une zone éloignée du dispositif de prise de vues 23 représentent une surface plus grande que les pixels représentatifs de la rive droite 31 de la rivière, c'est-à-dire une zone proche du dispositif de prise de vues 23. Donc un objet proche de la rive gauche 33 se déplaçant d'un pixel entre deux images d'observation, se déplacera en réalité d'une distance plus grande qu'un objet proche de la rive droite se déplaçant aussi d'un pixel entre deux images d'observation. Afin de corriger la correspondance géographique des déplacements en pixel, on peut appliquer deux types de correction.

Selon une forme de réalisation préférentielle, on applique une correction géométrique à l'image d'observation afin d'imposer que tous les pixels représentent la même surface géographique. A cet effet, on réalise une étape *E301* de création d'une image « mise à l'échelle » lors de laquelle on crée une image « mise à l'échelle » de la surface d'eau 5 pour laquelle tous les pixels images représentent la même surface géographique. Cela revient à déformer les pixels éloignés du dispositif de prise de vue 23 dans l'image en diminuant leur surface, et à inversement augmenter la surface des pixels proches.

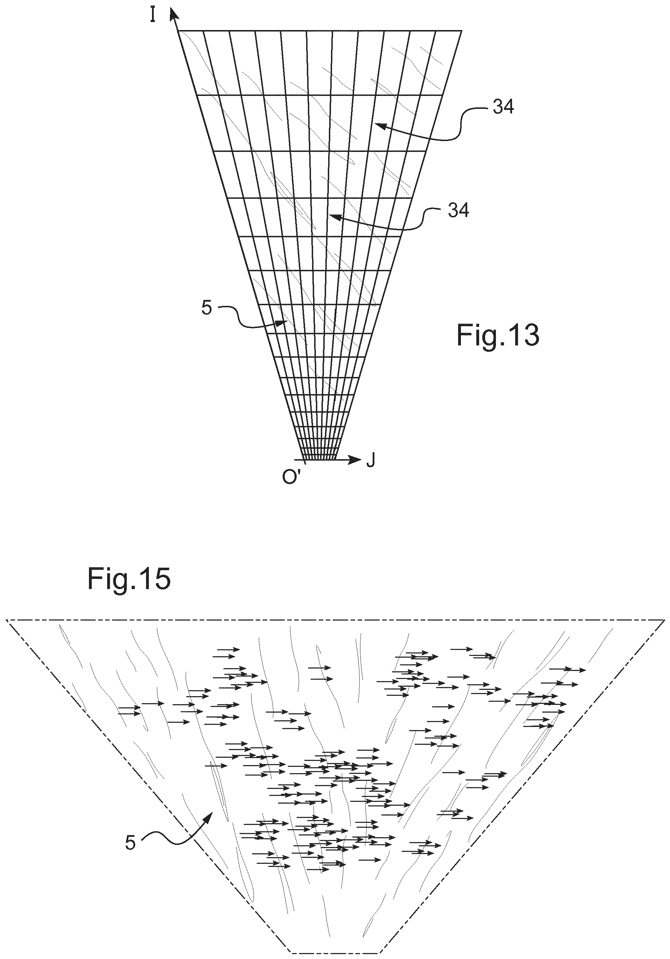

La figure 13 représente la surface d'eau 5 sur l'image mise à l'échelle. Sur cet exemple chaque division représente un pixel déformé 34. Les pixels déformés 34 représentent tous une surface de 2,5x2,5 cm$^2$. Cette surface a été imposée quelle que soit la position du pixel sur l'image. La taille est le nombre des pixels déformés 34 sur cette figure n'est pas une représentation de la réalité. Leur nombre a été réduit et leur taille augmentée pour une meilleure compréhension. Comme dit précédemment, l'image présente plusieurs centaines voire plusieurs milliers de pixels selon chaque axe.

Pour utiliser l'image mise à l'échelle, il est nécessaire de connaître la position du niveau de la surface d'eau 5 sur l'image d'observation, d'une part pour supprimer des zones fixes correspondant aux rives 31, 33 et aux structures matérielles permanentes, (l'intérêt de la suppression de zones fixes est décrite dans la partie suivante) et d'autre part pour pouvoir calculer les positions, dans l'espace géographique, de tous les pixels de la surface d'eau 5. Pour cela, le calcul du niveau de la surface d'eau 5, tel que défini précédemment, fournit les informations nécessaires.

La surface des pixels est fixée soit par l'utilisateur, soit par les dimensions de l'image d'observation et du champ du dispositif de prise de vue. La position de chaque pixel de l'image d'observation dans l'image mise à l'échelle est calculée en fonction de ses coordonnées géographiques et de cette surface fixée.

L'avantage de cette méthode est qu'elle permet de calculer des déplacements dans toutes les directions de façon identique, puisque la taille d'un traceur s'approchant ou s'éloignant du dispositif de prise de vues ne change pas. Ceci permet une disposition quelconque du dispositif de prise de vues par rapport au sens de l'écoulement de la surface d'eau 5.

Selon une autre forme de réalisation, les fonctions de corrélations de la PIV sont calculées directement à partir d'images d'observation non corrigées par la mise à l'échelle. Ceci a pour avantage de ne pas dégrader les formes des traceurs. Dans ce cas le dispositif de prise de vues doit être positionné de façon à ce que l'axe vertical ou l'axe horizontal de l'image d'observation soit parallèle au sens de l'écoulement de la surface d'eau.

• *E302 :* Suppression des zones fixes

Quand les zones fixes de l'image d'observation couvrent une surface plus grande que les traceurs dont on cherche à établir le déplacement, alors les résultats de la PIV peuvent être dégradés. En effet, la fonction de corrélation sera maximale lorsque les zones fixes de la première image de PIV et de la deuxième image de PIV se superposeront et non lorsque les traceurs des deux images de PIV se superposeront.

On reprend l'exemple illustré par les figures 3a et 3b. Si la zone mouvante 9 télésiège apparaissait beaucoup plus petite que la zone fixe 11 montagne, alors la PIV aurait mesuré le déplacement de la zone fixe 11 montagne et non de la zone mouvante 9 télésiège.

Pour un traitement d'image d'observation optimal, on prend donc en compte l'existence de zones fixes 11 sur les images d'observation. Les zones fixes 11 sur l'image d'observation comprennent par exemple les rives de la surface d'eau 5, les structures permanentes 15 ou bien encore le reflet des arbres sur la surface d'eau 5.

Selon une forme préférentielle de réalisation, on effectue une étape *E302* de suppression des zones fixes 11 sur l'image mise à l'échelle (ou sur l'image d'observation si l'étape *E301* de création d'image à l'échelle n'a pas été réalisée) avant d'utiliser la PIV. Pour cela, on doit dans un premier temps déterminer la position des zones fixes 11 et la position des zones mouvantes 9.

Selon une forme de réalisation, on détermine les zones fixes 11 et les zones mouvantes 9, en détectant les couleurs des traceurs 37. Selon une autre forme de réalisation, on détecte les contours des traceurs 37.

On utilise de préférence la détection des couleurs des traceurs 37 car cette solution est plus simple à mettre en oeuvre.Dans ce cas, la modification de la position d'un traceur 37 dans le monde réel est représentée par des pixels dont la couleur a été fortement modifiée entre la première et la deuxième image d'observation.

Par couleur, on entend les caractéristiques colorimétriques telles que décrites précédemment. Pour l'étape *E302* de suppression des zones fixes, on utilise de préférence une combinaison des caractéristiques colorimétriques du codage RGB.

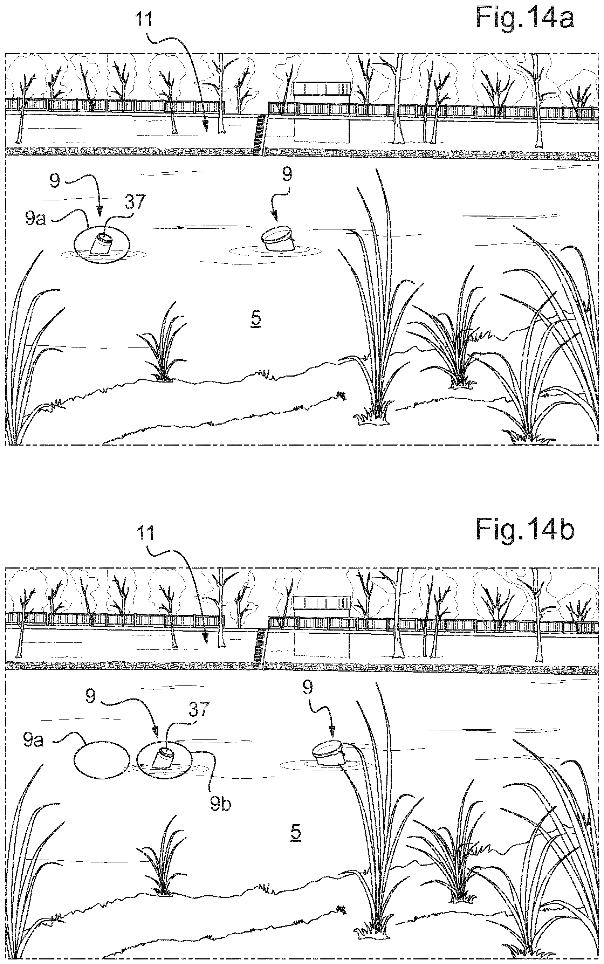

La figure 14a représente une première image d'observation, la figure 14b représente une deuxième image d'observation capturée après la première image d'observation. Les figures 14a et 14b comprennent toutes deux les zones fixes 11 et les zones mouvantes 9. Les figures 14a et 14b comprennent aussi un traceur 37, par exemple un bidon en plastique flottant à la surface de la surface d'eau 5. La zone mouvante 9 correspondant à la position image du traceur 37 a été entourée sur les figures 14a et 14b. Pour une meilleure compréhension, les figures 14a et 14b représentent des images d'observation non mises à l'échelle.

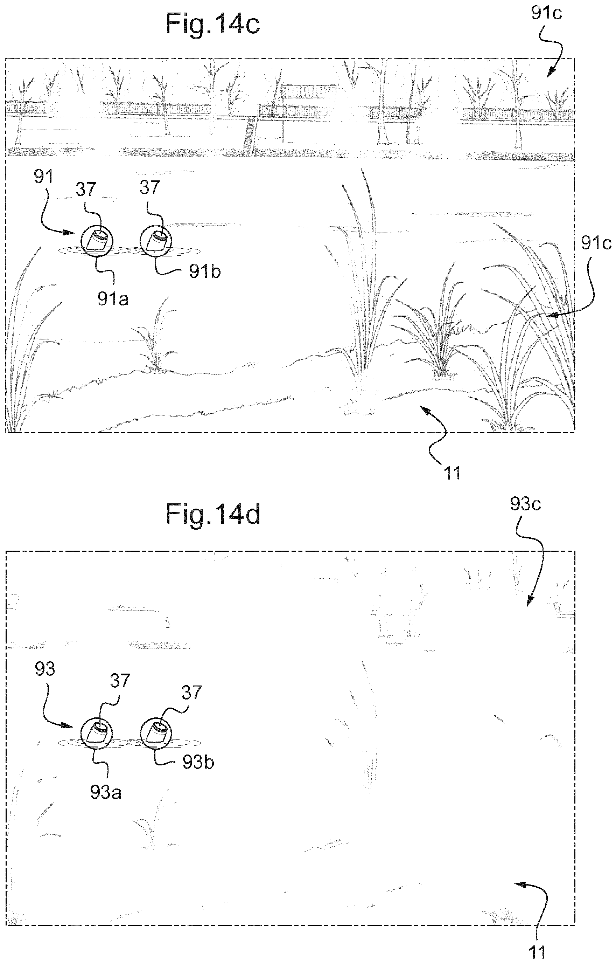

Pour mettre en évidence ces zones mouvantes 9, on réalise une image composite en soustrayant la première à la deuxième image d'observation (ou vice-versa). Deux exemples d'image composite sont illustrés par les figures 14c et 14d.

Les pixels représentant une zone fixe 11, présentent une couleur semblable sur la première et la deuxième image d'observation. Par conséquent, l'image composite résultant de la soustraction de la première à la deuxième image d'observation présente une valeur de pixel très faible à l'emplacement d'une zone fixe 11.

Inversement, les pixels représentant une zone mouvante 9, présentent des couleurs différentes entre la première et la deuxième image d'observation est élevée. Par conséquent, l'image composite présentera une valeur de pixel élevée à l'emplacement d'une zone mouvante 9.

Les pixels dont la couleur est sensiblement invariante d'une image d'observation à l'autre ne sont pas conservés. Ainsi, l'information relative aux zones fixes 11 est supprimée.

Ne sont conservés pour analyse, que les pixels dont la couleur a fortement changé d'une image d'observation à l'autre. Le terme « fortement » se traduit par un seuil de variation de couleur. Afin de ne pas avoir à définir un seuil de variation de couleur adapté à chaque site d'observation et à chaque condition lumineuse, on utilise un système itératif de recherche de zones fixes 11. On pallie ainsi le problème du dimensionnement du seuil de variation de couleur.

En effet, le concept du système itératif est que plus la couleur d'un même pixel varie entre deux images d'observation, et plus on est certain d'avoir détecté une zone mouvante 9. Dans une première itération, on utilise un premier seuil de variation haut. Les pixels dont la variation de couleur est supérieure au premier seuil de variation de couleur sont conservés pour l'itération suivante, les pixels dont la variation de couleur est inférieure au premier seuil de variation de couleur ne seront plus utilisés dans le système itératif.

On réitère la comparaison en diminuant le seuil de variation de couleur à chaque itération, jusqu'à atteindre une valeur minimale du seuil de variation non nulle. On sélectionne alors l'image composite résultant d'une itération correspondant à un seuil moyen, par exemple 60% du seuil pour lequel commençait à apparaître des zones mouvantes. Ceci est illustré par la figure 14c représentant une première image composite. Sur cette figure, des zones mouvantes en première approximation 91 sont représentées en noir, les zones fixes 11 sont représentées en blanc. Une première zone mouvante en première approximation 91a et une deuxième zone mouvante en première approximation 91 correspondent aux positions du traceur 37 respectivement indiquées dans les figures 14a et 14b.

Selon le principe de composition d'une image composite par soustraction de deux images d'observation successives, les zones mouvantes en première approximation 91 vont apparaître en double. Selon l'exemple, le traceur 37 apparaît deux fois sur la première et la deuxième image composite. La première zone mouvante en première approximation 91a correspond à la position du traceur 37 sur la première image d'observation. La deuxième zone mouvante en première approximation 91b correspond à la position du même traceur 37 sur la deuxième image d'observation.

On voit aussi des zones mouvantes parasites en première approximation 91c, par exemple au premier plan de la première image composite. Ces zones mouvantes sont qualifiées de parasites car elles n'apportent pas d'information sur les traceurs 37. Sur la première image composite en exemple, les zones mouvantes parasites en première approximation 91c correspondent à des végétaux s'étant légèrement déplacés à cause du vent.

Afin de supprimer les zones mouvantes parasites en première approximation 91c, on réalise une deuxième itération en diminuant le seuil de variation. Ainsi, des zones correspondant à des variations de couleurs de moins en moins élevées sont déterminées. La figure 14d représente une deuxième image composite obtenue avec un deuxième seuil de variation plus élevé que le premier seuil de variation. Des zones mouvantes parasites en deuxième approximation 93c apparaissent, cependant leur taille est réduite par rapport à celle des zones parasites en première approximation 91c.

La taille de la première zone mouvante en deuxième approximation 93a et de la deuxième zone mouvante en deuxième approximation 93b est aussi réduite par rapport à la taille de la première zone mouvante en première approximation 91 a et de la deuxième zone mouvante en première approximation 91b.

Le système itératif est arrêté lorsqu'une valeur minimale non nulle de variation de couleur est atteinte. Parmi toutes les valeurs de seuil testées, on choisit une valeur intermédiaire, par exemple celle correspondant à 60% de la valeur maximale pour laquelle des zones mouvantes apparaissent. Plus cette condition d'arrêt est élevée, plus les zones déterminées comme mouvantes 9 correspondent à des variations importantes de couleur, et donc plus elles sont certaines.

Selon une autre forme de réalisation, on ne procède pas à la suppression des zones fixes 11.

• *E303 :* Application de la PIV

Finalement, on détermine le déplacement du traceur 37 grâce à la PIV lors d'une étape *E303* d'application de PIV. Si les zones fixes ont été supprimées lors de l'étape *E302* de suppression des zones fixes, alors le calcul de la PIV est effectué sur les pixels composants les zones mouvantes 9 et non plus sur l'image composite entière. Cette correction permet de réduire l'incertitude sur l'estimation du champ de vitesse de surface de la surface d'eau.

Etant donné que le même traceur 37 apparaît à deux positions sur une même image composite, la PIV calcule deux déplacements de sens opposés. Le choix entre les deux déplacements peut par exemple s'effectuer en contraignant le sens amont-aval du courant sur les images composites.

Puis, la PIV détermine les vitesses de surface en pixel par seconde en divisant le déplacement de chaque traceur 37 par l'intervalle de temps entre la capture de la première image d'observation et la capture de la deuxième image d'observation.

La figure 15 représente les vitesses de surface de la surface d'eau 5. Chaque flèche individuelle représente la vitesse de surface d'un traceur.

• *E304 :* Calculs des vitesses de surface métriques

Finalement, on convertit les vitesses de surface en pixel en vitesses de surface métriques lors d'une étape E304 de calculs des vitesses de surface métriques. Le procédé comprend une méthode simple pour calculer les déplacements métriques à partir des déplacements en pixels sur les images d'observation. En effet, la création d'image à l'échelle permet de calculer la vitesse de surface d'un traceur 37 à partir de l'équation (3):

$$V_{(x,y)} = \sqrt{\left( \varDelta I_{(i,j)} . T_H \right)^2 + \left( \varDelta J_{(i,j)} . T_V \right)^2} \qquad (3)$$

Où:

 ◦ $V_{(x, y)}$ est la vitesse d'un traceur, ici en m.s$^{-1}$, calculée à partir des coordonnées image (*i,j*) du traceur 37 correspondant à une position géographique (*x,y*) sur la surface d'eau de niveau précédemment estimé.

 ◦ $\Delta I_{(i,j)}$, $\Delta J_{(i,j)}$ sont les déplacements en pixels calculés par la PIV du traceur de coordonnées (*i,j*), (les unités de $\Delta I$ et $\Delta J$ sont exprimées en unité pixel. On divise ensuite par le temps entre deux images pour calculées une vitesse en unité pixel.s-1. La connaissance de la hauteur d'eau en unité métrique permet ensuite d'exprimer ces déplacements en m.s$^{-1}$)

 ◦ $T_H$, $T_V$ sont les dimensions métriques respectivement verticale et horizontale des pixels définis lors de la création de l'image à l'échelle. Dans l'exemple, $T_H = T_V = 0{,}025$m.

Selon la forme de réalisation où on ne réalise pas d'image mise à l'échelle, la taille métrique des déplacements est calculée en inversant la matrice de transformation géométrique pour les deux points image définissant le vecteur, ceci en s'appuyant sur la connaissance de la position du plan d'eau.

On comprend donc qu'un procédé détermination du niveau d'une surface d'eau et des vitesses de surface de la surface d'eau selon l'invention, utilisant des points de référence immatériels répartis sur tout le site d'observation permet d'améliorer la précision des résultats d'une façon simple et non intrusive et sans pour autant augmenter significativement le coût du procédé par rapport aux solutions proposées par l'art antérieur.

**Revendications**

1. Procédé de détermination d'un paramètre d'observation associé à une surface d'eau (5) par imagerie, comprenant les étapes suivantes :

   • une phase de référencement comprenant les étapes suivantes :

      ◦ on répartit des points de référence (19,21) sur un site d'observation, ledit site d'observation comprenant une surface d'eau (5), au moins une structure permanente (15) et au moins un support visuel (7) au moins partiellement immergé dans la surface d'eau (5), lesdits points de références (19,21) comprenant des points de référence matériels (19) présents sur la structure permanente (15) et sur le support visuel (7),
      ◦ on mesure les coordonnées géographiques référence $(x_{n0}, y_{n0}, z_{n0})$ desdits points de référence (19,21),
      ◦ on détermine des coordonnées images référence $(i_{n0}, j_{n0})$ desdits points de référence (19,21) à partir d'au moins une image référence,

   • une phase d'observation comprenant les étapes suivantes :

      ◦ on capture au moins une image d'observation du site d'observation,
      ◦ on établit un modèle mathématique $(\mathcal{M})$ permettant de déterminer les coordonnées images d'un objet compris sur le site d'observation, à partir de coordonnées géographiques dudit objet, grâce aux coordonnées géographiques référence $(x_{n0}, y_{n0}, z_{n0})$ des points de référence (19,21), aux coordonnées images référence $(i_{n0}, j_{n0})$ respectives desdits points de référence (19,21) et à des coordonnées images d'observation $(i_n, j_n)$ respectives desdits points de référence (19,21) sur l'image d'observation,
      ◦ on établit les coordonnées images d'observation $(i_n, j_n)$ de la surface d'eau (5) à l'emplacement du au moins un support visuel (7) sur l'image d'observation grâce au support visuel (7),
      ◦ on utilise le modèle mathématique $(\mathcal{M})$ avec les coordonnées images d'observation $(i_n, j_n)$ de la surface d'eau (5) sur l'image d'observation pour déterminer au moins un paramètre d'observation de la surface d'eau (5),

   **caractérisé en ce que** la phase de référencement comprend l'étape suivante:

      ◦ on place au moins une structure temporaire (20) sur le site d'observation à distance de la structure permanente (15) et à distance du support visuel (7) afin d'indiquer une position d'au moins un point de référence immatériel (21), les coordonnées images référence $(i_{n0}, j_{n0})$ étant déterminées des points de référence matériels (19) et du ou des points de référence immatériels (21).

2. Procédé de détermination d'un paramètre d'observation associé à une surface d'eau (5) selon la revendication 1, **caractérisé en ce que** la surface d'eau est déterminée par colorimétrie des pixels.

3. Procédé de détermination d'un paramètre d'observation associé à une surface d'eau (5) selon l'une des revendications précédentes, **caractérisé en ce que** la phase d'observation comprend une étape supplémentaire lors de laquelle :

   • on détecte les points de référence matériels (19) sur l'image d'observation,
   • on compare les coordonnées images d'observation $(i_n, j_n)$ des points de référence matériels (19) satisfaisant un seuil minimum de corrélation avec leurs coordonnées images référence $(i_{n0}, j_{n0})$ respectives des points de référence matériels (19),
   • on détermine un déplacement individuel des points de référence matériels (19) satisfaisant un seuil minimum de corrélation entre l'image d'observation et l'image référence,
   • on détermine un déplacement global de l'image d'observation correspondant au déplacement individuel commun à une majorité de points de référence matériels (19) satisfaisant un seuil minimum de corrélation,
   • on corrige les coordonnées images de tous les points de référence (19, 21) de sorte que chaque point de référence (19, 21) se déplace d'une distance égale au déplacement global entre l'image de référence et l'image d'observation pour obtenir ainsi des coordonnées images corrigées $(i_{nc}, j_{nc})$ desdits points de référence matériels (19) et desdits points de référence immatériels (21),
• on établit le modèle mathématique ($\mathcal{M}$) à partir des coordonnées géographiques référence $(x_{n0}, y_{n0}, z_{n0})$ desdits points de référence matériels (19) et desdits points de référence immatériels (21), et de leurs coordonnées images corrigées $(i_{nc}, j_{nc})$ respectives.

4. Procédé de détermination d'un paramètre d'observation associé à une surface d'eau (5) selon l'une des revendications précédentes, **caractérisé en ce que** les paramètres d'observation comprennent au moins un paramètre parmi le niveau de la surface d'eau (5) et les vitesses de surfaces de la surface d'eau (5).

5. Procédé de détermination d'un paramètre d'observation associé à une surface d'eau (5) selon l'une des revendications précédentes, **caractérisé en ce qu'**on établit les coordonnées images d'observation de la surface d'eau (5) à l'emplacement du au moins un support visuel (7) comme correspondant aux coordonnées images d'observation de l'intersection réelle (25a) entre le au moins un support visuel (7) et la surface d'eau (5).

6. Procédé de détermination d'un paramètre d'observation associé à une surface d'eau (5) selon la revendication 5, **caractérisé en ce que** la détermination de l'intersection réelle (25a) entre le support visuel (7) et la surface d'eau (5) comprend les étapes suivantes :

   • on détermine une pluralité d'intersections possibles (25) entre le support visuel (7) et la surface d'eau (5) en analysant la valeur d'au moins un paramètre associé aux pixels représentant une zone de l'image comprenant au moins le support visuel (7) et une partie de la surface d'eau (5),
   • on détermine les contours (27) du support visuel (7) en analysant la valeur d'au moins un autre paramètre associé aux pixels représentant une zone de l'image comprenant au moins le support visuel (7) et une partie de la surface d'eau (5),
   • on détermine l'intersection réelle (25a) comme correspondant à la fois à une intersection possible (25) et à une discontinuité des contours (27) du support visuel (7).

7. Procédé de détermination d'un paramètre d'observation associé à une surface d'eau (5) selon l'une des revendications 4 à 6, **caractérisé en ce qu'**au moins une vitesse de surface est calculée à partir d'une première image d'observation et d'une deuxième image d'observation, en estimant le déplacement d'au moins un traceur (37) sur la surface de la surface d'eau (5) entre ladite première image d'observation et ladite deuxième image d'observation, et à partir d'un intervalle de temps entre la capture de ladite première image d'observation et ladite deuxième image d'observation.

8. Procédé de détermination d'un paramètre d'observation associé à une surface d'eau (5) selon la revendication 7, **caractérisé en ce que** le déplacement du traceur (37) est déterminé par vélocimétrie par imagerie de particules.

9. Procédé de détermination d'un paramètre d'observation associé à une surface d'eau (5) selon l'une des revendications 7 ou 8, comprenant les étapes suivantes :

   • on soustrait deux images d'observation afin d'obtenir une image composite,
   • on compare la valeur d'au moins un paramètre associé aux pixels de l'image composite à un seuil de variation de la valeur dudit paramètre,
   • on conserve des zones de l'image composite définies par les pixels dont la valeur d'au moins un paramètre est supérieure audit seuil de variation de la valeur dudit paramètre, les zones de l'image composite conservées sont appelées zones mouvantes (9),
   • on détermine les vitesses de surface des traceurs (37) à partir desdites zones mouvantes.

10. Procédé de détermination d'un paramètre d'observation associé à une surface d'eau (5) selon l'une des revendications 7 à 9, **caractérisé en ce que** la détermination d'au moins une vitesse de surface comprend une étape supplémentaire lors de laquelle on crée une première image mise à l'échelle à partir de la première image d'observation et une deuxième image mise à l'échelle à partir de la deuxième image d'observation sur lesquelles tous les pixels représentent la même surface géographique.

11. Système de détermination d'un paramètre d'observation associé à une surface d'eau (5), pour la mise en oeuvre d'un procédé de détermination d'un paramètre d'observation associé à une surface d'eau (5) par imagerie selon l'une quelconque des revendications précédentes, **caractérisé en ce que** ledit système comprend :

• un dispositif de prise de vues (23) configuré pour capturer des données relatives à un site d'observation comprenant la surface d'eau (5), lesdites données comprenant :

◦ au moins une image d'observation du site d'observation comprenant la surface d'eau (5), au moins une structure permanente (15) et au moins un support visuel (7) au moins partiellement immergé dans la surface d'eau (5), et
◦ au moins une image référence du site d'observation comprenant des points de référence matériels (19) et immatériels (21), lesdits points de référence matériels étant présents sur la structure permanente (15) et sur le support visuel (7), et la position d'au moins un point de référence immatériel (21) étant indiquée à l'aide d'au moins une structure temporaire (20) sur le site d'observation à distance de la structure permanente (15) et à distance du support visuel (7),

• des moyens de détermination de coordonnées géographiques référence $(x_{n0}, y_{n0}, z_{n0})$ desdits points de référence matériels (19) et desdits points de référence immatériels (21),
• des moyens de traitement des données configurés pour :

○ déterminer des coordonnées images référence $(i_{n0}, j_{n0})$ des points de référence matériels (19) et des points de référence immatériels (21),
○ déterminer un modèle mathématique ($\mathcal{M}$) permettant de calculer des coordonnées images à partir de coordonnées géographiques d'un objet sur le site d'observation en utilisant les coordonnées géographiques référence $(x_{n0}, y_{n0}, z_{n0})$ et coordonnées images référence $(i_{n0}, j_{n0})$ des points de référence matériels (19) et des points de référence immatériels (21) et des coordonnées images d'observation $(i_n, j_n)$ respectives desdits points de référence (19,21) sur l'image d'observation,
◦ établir les coordonnées images d'observation $(i_n, j_n)$ de la surface d'eau (5) à l'emplacement du au moins un support visuel (7) sur l'image d'observation grâce au support visuel (7),
◦ utiliser le modèle mathématique ($\mathcal{M}$) avec les coordonnées images d'observation $(i_n, j_n)$ de la surface d'eau (5) sur l'image d'observation pour déterminer au moins un paramètre d'observation de la surface d'eau (5), et

• des moyens de transmission des données entre le dispositif de prise de vues (23) et les moyens de traitement des données.

**12.** Système de détermination d'un paramètre d'observation associé à une surface d'eau (5) selon la revendication 11, **caractérisé en ce que** le dispositif de prise de vues (23) est un dispositif de prise de vues numérique.


## Patentansprüche

**1.** Verfahren zur Bestimmung eines Beobachtungsparameters einer Wasseroberfläche (5) durch Abbildung, umfassend die folgenden Schritte:

\* eine Referenzierungsphase, umfassend die folgenden Schritte:

- Verteilen von Referenzpunkten (19, 21) an einem Beobachtungsstandort, wobei der Beobachtungsstandort eine Wasseroberfläche (5), mindestens eine permanente Struktur (15) und mindestens ein visuelles Hilfsmittel (7), das zumindest teilweise in die Wasseroberfläche (5) getaucht ist, umfasst, wobei die Referenzpunkte (19, 21) materielle Referenzpunkte (19) umfassen, die auf der permanenten Struktur (15) und auf dem visuellen Hilfsmittel (7) vorhanden sind,
- Messen der geografischen Referenzkoordinaten $(x_{n0}\ y_{n0}, z_{n0})$ der Referenzpunkte (19, 21),
- Bestimmen der Referenzbildkoordinaten $(i_{n0}, j_{n0})$ der Referenzpunkte (19, 21) auf Basis mindestens eines Referenzbildes,

\* eine Beobachtungsphase, umfassend die folgenden Schritte:

- Erfassen mindestens eines Beobachtungsbildes des Beobachtungsstandortes,
- Erstellen eines mathematischen Modells (M), das es ermöglicht, die Bildkoordinaten eines Objekts, das am Beobachtungsstandort vorhanden ist, auf Basis von geografischen Koordinaten des Objekts zu bestimmen, dank der geografischen Referenzkoordinaten $(x_{n0}, y_{n0}, z_{n0})$ der Referenzpunkte (19, 21), der jeweiligen Referenzbildkoordinaten $(i_{n0}, j_{n0})$ der Referenzpunkte (19, 21) und der jeweiligen Beobachtungsbildkoordinaten $(i_n, j_n)$ der Referenzpunkte (19, 21) auf dem Beobachtungsbild,

- Erstellen der Beobachtungsbildkoordinaten $(i_n, j_n)$ der Wasseroberfläche (5) an der Stelle des mindestens einen visuellen Hilfsmittels (7) auf dem Beobachtungsbild dank des visuellen Hilfsmittels (7),
- Verwenden des mathematischen Modells (M) mit den Beobachtungsbildkoordinaten $(i_n, j_n)$ der Wasseroberfläche (5) auf dem Beobachtungsbild, um mindestens einen Beobachtungsparameter der Wasseroberfläche (5) zu bestimmen,

**dadurch gekennzeichnet, dass** die Referenzierungsphase den folgenden Schritt umfasst:

- Anordnen mindestens einer temporären Struktur (20) am Beobachtungsstandort in einer Distanz zur permanenten Struktur (15) und in einer Distanz zum visuellen Hilfsmittel (7), um eine Position mindestens eines immateriellen Referenzpunktes (21) anzuzeigen, wobei die Referenzbildkoordinaten $(i_{n0}, j_{n0})$ aus den materiellen Referenzpunkten (19) und dem oder den immateriellen Referenzpunkten (21) bestimmt werden.

2. Verfahren zur Bestimmung eines Beobachtungsparameters einer Wasseroberfläche (5) nach Anspruch 1, **dadurch gekennzeichnet, dass** die Wasseroberfläche durch Pixel-Farbmessung bestimmt wird.

3. Verfahren zur Bestimmung eines Beobachtungsparameters einer Wasseroberfläche (5) nach einem der vorhergehenden Ansprüche, **dadurch gekennzeichnet, dass** die Beobachtungsphase einen zusätzlichen Schritt umfasst, bei dem:

* die materiellen Referenzpunkte (19) auf dem Beobachtungsbild erfasst werden,
* die Beobachtungsbildkoordinaten $(i_n, j_n)$ der materiellen Referenzpunkte (19), die einer Mindestkorrelationsschwelle entsprechen, mit ihren jeweiligen Referenzbildkoordinaten $(i_{n0}, j_{n0})$ der materiellen Referenzpunkte (19) verglichen werden,
* eine individuelle Bewegung der materiellen Referenzpunkte (19) bestimmt wird, die einer Mindestkorrelationsschwelle zwischen dem Beobachtungsbild und dem Referenzbild entsprechen,
* eine globale Bewegung des Beobachtungsbildes bestimmt wird, entsprechend einer individuellen Bewegung, die einer Mehrzahl von materiellen Referenzpunkten (19) gemein ist, die einer Mindestkorrelationsschwelle entsprechen,
* die Bildkoordinaten aller Referenzpunkte (19, 21) korrigiert werden, so dass sich jeder Referenzpunkt (19, 21) um eine Distanz gleich der globalen Bewegung zwischen dem Referenzbild und dem Beobachtungsbild bewegt, wodurch korrigierte Bildkoordinaten $(i_{nc}, j_{nc})$ der materiellen Referenzpunkte (19) und der immateriellen Referenzpunkte (21) erhalten werden,
* das mathematische Modell (M) auf Basis der geografischen Referenzkoordinaten $(x_{n0}, y_{n0}, z_{n0})$ der materiellen Referenzpunkte (19) und der immateriellen Referenzpunkte (21) und ihrer jeweiligen korrigierten Bildkoordinaten $(i_{nc}, j_{nc})$ erstellt wird.

4. Verfahren zur Bestimmung eines Beobachtungsparameters einer Wasseroberfläche (5) nach einem der vorhergehenden Ansprüche, **dadurch gekennzeichnet, dass** die Beobachtungsparameter mindestens einen Parameter von Niveau der Wasseroberfläche (5) und Oberflächengeschwindigkeiten der Wasseroberfläche (5) umfassen.

5. Verfahren zur Bestimmung eines Beobachtungsparameters einer Wasseroberfläche (5) nach einem der vorhergehenden Ansprüche, **dadurch gekennzeichnet, dass** die Beobachtungsbildkoordinaten der Wasseroberfläche (5) an der Stelle des mindestens einen visuellen Hilfsmittels (7) als entsprechend den Beobachtungsbildkoordinaten der tatsächlichen Schnittstelle (25a) zwischen dem mindestens einen visuellen Hilfsmittel (7) und der Wasseroberfläche (5) erstellt werden.

6. Verfahren zur Bestimmung eines Beobachtungsparameters einer Wasseroberfläche (5) nach Anspruch 5, **dadurch gekennzeichnet, dass** die Bestimmung des tatsächlichen Schnittpunktes (25a) zwischen dem visuellen Hilfsmittel (7) und der Wasseroberfläche (5) die folgenden Schritte umfasst:

* Bestimmen einer Vielzahl von möglichen Schnittpunkten (25) zwischen dem visuellen Hilfsmittel (7) und der Wasseroberfläche (5), wobei der Wert mindestens eines den Pixeln zugeordneten Parameters analysiert wird, der eine Zone des Bildes, umfassend mindestens das visuelle Hilfsmittel (7) und einen Teil der Wasseroberfläche (5), darstellt,

* Bestimmen der Konturen (27) des visuellen Hilfsmittels (7), wobei der Wert mindestens eines weiteren den Pixeln zugeordneten Parameters analysiert wird, der eine Zone des Bildes, umfassend mindestens das visuelle Hilfsmittel (7) und einen Teil der Wasseroberfläche (5), darstellt,
* Bestimmen des tatsächlichen Schnittpunktes (25a) als entsprechend sowohl einem möglichen Schnittpunkt (25) als auch einer Diskontinuität der Konturen (27) des visuellen Hilfsmittels (7).

7. Verfahren zur Bestimmung eines Beobachtungsparameters einer Wasseroberfläche (5) nach einem der Ansprüche 4 bis 6, **dadurch gekennzeichnet, dass** mindestens eine Oberflächengeschwindigkeit auf Basis eines ersten Beobachtungsbildes und eines zweiten Beobachtungsbildes berechnet wird, wobei die Bewegung mindestens eines Tracers (37) auf der Fläche der Wasseroberfläche (5) zwischen dem ersten Beobachtungsbild und dem zweiten Beobachtungsbild und auf Basis eines Zeitintervalls zwischen der Erfassung des ersten Beobachtungsbildes und des zweiten Beobachtungsbildes geschätzt wird.

8. Verfahren zur Bestimmung eines Beobachtungsparameters einer Wasseroberfläche (5) nach Anspruch 7, **dadurch gekennzeichnet, dass** die Bewegung des Tracers (37) durch Particle Image Velocimetry (PIV) bestimmt wird.

9. Verfahren zur Bestimmung eines Beobachtungsparameters einer Wasseroberfläche (5) nach einem der Ansprüche 7 oder 8, umfassend die folgenden Schritte:

* Abziehen von zwei Beobachtungsbildern, um ein zusammengesetztes Bild zu erhalten,
* Vergleichen des Werts mindestens eines den Pixeln des zusammengesetzten Bildes zugeordneten Parameters mit einer Variationsschwelle des Werts des Parameters,
* Bewahren der Zonen des zusammengesetzten Bildes, die durch die Pixel definiert sind, bei denen der Wert mindestens eines Parameters größer als die Variationsschwelle des Werts des Parameters ist, wobei die bewahrten Zonen des zusammengesetzten Bildes Bewegungszonen (9) genannt werden,
* Bestimmen der Oberflächengeschwindigkeiten der Tracer (37) anhand der Bewegungszonen.

10. Verfahren zur Bestimmung eines Beobachtungsparameters einer Wasseroberfläche (5) nach einem der Ansprüche 7 bis 9, **dadurch gekennzeichnet, dass** die Bestimmung mindestens einer Oberflächengeschwindigkeit einen zusätzlichen Schritt umfasst, bei dem ein erstes skaliertes Bild aus dem ersten Beobachtungsbild und ein zweites skaliertes Bild aus dem zweiten Beobachtungsbild erzeugt werden, auf denen alle Pixel dieselbe geografische Oberfläche darstellen.

11. System zur Bestimmung eines Beobachtungsparameters einer Wasseroberfläche (5) für den Einsatz eines Verfahrens zur Bestimmung eines Beobachtungsparameters einer Wasseroberfläche (5) durch Abbildung nach einem der vorhergehenden Ansprüche, **dadurch gekennzeichnet, dass** das System umfasst:

* eine Bildaufnahmevorrichtung (23), die dazu vorgesehen ist, Daten in Zusammenhang mit einem Beobachtungsstandort, umfassend die Wasseroberfläche (5), zu erfassen, wobei die Daten umfassen:

    - mindestens ein Beobachtungsbild des Beobachtungsstandortes, umfassend die Wasseroberfläche (5), mindestens eine permanente Struktur (15) und mindestens ein visuelles Hilfsmittel (7), das zumindest teilweise in die Wasseroberfläche (5) getaucht ist, und
    - mindestens ein Referenzbild des Beobachtungsstandortes, umfassend materielle (19) und immaterielle (21) Referenzpunkte, wobei die materiellen Referenzpunkte auf der permanenten Struktur (15) und auf dem visuellen Hilfsmittel (7) vorhanden sind, und wobei die Position mindestens eines immateriellen Referenzpunktes (21) mit Hilfe mindestens einer temporären Struktur (20) am Beobachtungsstandort in einer Distanz zu der permanenten Struktur (15) und in einer Distanz zum visuellen Hilfsmittel (7) angegeben ist,

* Mittel zur Bestimmung von geografischen Referenzkoordinaten ($x_{n0}$, $y_{n0}$, $z_{n0}$) der materiellen Referenzpunkte (19) und der immateriellen Referenzpunkte (21),
* Mittel zur Verarbeitung der Daten, die dazu vorgesehen sind:

    - Referenzbildkoordinaten ($i_{n0}$, $j_{n0}$) der materiellen Referenzpunkte (19) und der immateriellen Referenzpunkte (21) zu bestimmen,
    - ein mathematisches Modell (M) zu bestimmen, das es ermöglicht, Bildkoordinaten eines Objekts am Beobachtungsstandort auf Basis von geografischen Koordinaten, unter Verwendung der geografischen Referenzkoordinaten ($x_{n0}$, $y_{n0}$, $z_{n0}$) und Referenzbildkoordinaten ($i_{n0}$, $j_{n0}$) der materiellen Referenzpunkte

(19) und der immateriellen Referenzpunkte (21) und jeweiliger Beobachtungsbildkoordinaten ($i_n$, $j_n$) der Referenzpunkte (19, 21) auf dem Beobachtungsbild zu berechnen,
- die Beobachtungsbildkoordinaten ($i_n$, $j_n$) der Wasseroberfläche (5) an der Stelle des mindestens einen visuellen Hilfsmittels (7) auf dem Beobachtungsbild dank des visuellen Hilfsmittels (7) zu erstellen,
- das mathematische Modell (M) mit den Beobachtungsbildkoordinaten ($i_n$, $j_n$) der Wasseroberfläche (5) auf dem Beobachtungsbild zu verwenden, um mindestens einen Beobachtungsparameter der Wasseroberfläche (5) zu bestimmen, und

\* Mittel zur Übertragung der Daten zwischen der Bildaufnahmevorrichtung (23) und den Mitteln zur Verarbeitung der Daten.

**12.** System zur Bestimmung eines Beobachtungsparameters einer Wasseroberfläche (5) nach Anspruch 11, **dadurch gekennzeichnet, dass** die Bildaufnahmevorrichtung (23) eine digitale Bildaufnahmevorrichtung ist.

**Claims**

**1.** Method for determining an observation parameter associated with a water surface (5) by imaging, comprising the following steps:

• a referencing phase comprising the following steps:

o reference points (19,21) are distributed over an observation site, the said observation site comprising a water surface (5), at least one permanent structure (15) and at least one visual support (7) at least partially immersed in the water surface (5), the said reference points (19,21) comprising tangible reference points (19) present on the permanent structure (15) and on the visual support (7),
◦ the reference geographical coordinates $(x_{n0}, y_{n0}, z_{n0})$ of the said reference points (19,21) are measured,
◦ reference image coordinates $(i_{n0} j_{n0})$ of the said reference points (19,21) are determined on the basis of at least one reference image,

• an observation phase comprising the following steps:

◦ at least one observation image of the observation site is captured,

◦ a mathematical model ($\mathcal{M}$) is established making it possible to determine the image coordinates of an object included on the observation site, on the basis of geographical coordinates of the said object, by virtue of the reference geographical coordinates $(x_{n0}, y_{n0}, z_{n0})$ of the reference points (19,21), the respective reference image coordinates $(i_{n0}, j_{n0})$ of the said reference points (19,21) and respective observation image coordinates $(i_n, j_n)$ of the said reference points (19,21) on the observation image,
◦ the observation image coordinates $(i_n, j_n)$ of the water surface (5) are established at the location of the at least one visual support (7) on the observation image by virtue of the visual support (7),

◦ the mathematical model ($\mathcal{M}$) is used with the observation image coordinates $(i_n, j_n)$ of the water surface (5) on the observation image to determine at least one observation parameter of the water surface (5),

**characterized in that** the referencing phase comprises the following step:

◦ at least one temporary structure (20) is placed on the observation site some distance from the permanent structure (15) and some distance from the visual support (7) so as to indicate a position of at least one intangible reference point (21), the reference image coordinates $(i_{n0}, j_{n0})$ being determined from the tangible reference points (19) and from the intangible reference point or points (21).

**2.** Method for determining an observation parameter associated with a water surface (5) according to Claim 1, **characterized in that** the water surface is determined by pixel colorimetry.

**3.** Method for determining an observation parameter associated with a water surface (5) according to one of the preceding claims, **characterized in that** the observation phase comprises an additional step during which:

• the tangible reference points (19) are detected on the observation image,

• the observation image coordinates $(i_n, j_n)$ of the tangible reference points (19) satisfying a minimum threshold of correlation are compared with their respective reference image coordinates $(i_{n0}, j_{n0})$ of the tangible reference points (19),

• an individual displacement is determined of the tangible reference points (19) satisfying a minimum threshold of correlation between the observation image and the reference image,

• a global displacement is determined of the observation image corresponding to the individual displacement common to a majority of tangible reference points (19) satisfying a minimum threshold of correlation,

• the image coordinates of all the reference points (19, 21) are corrected so that each reference point (19, 21) is displaced by a distance equal to the global displacement between the reference image and the observation image, corrected image coordinates $(i_{nc}, j_{nc})$ of the said tangible reference points (19) and of the said intangible reference points (21) are thus obtained,

• the mathematical model ($\mathcal{M}$) is established on the basis of the reference geographical coordinates $(x_{n0}, y_{n0}, z_{n0})$ of the said tangible reference points (19) and of the said intangible reference points (21), and of their respective corrected image coordinates $(i_{nc}, j_{nc})$.

4. Method for determining an observation parameter associated with a water surface (5) according to one of the preceding claims, **characterized in that** the observation parameters comprise at least one parameter from among the level of the water surface (5) and the speeds of surfaces of the water surface (5).

5. Method for determining an observation parameter associated with a water surface (5) according to one of the preceding claims, **characterized in that** the observation image coordinates of the water surface (5) at the location of the at least one visual support (7) are established as corresponding to the observation image coordinates of the real intersection (25a) between the at least one visual support (7) and the water surface (5).

6. Method for determining an observation parameter associated with a water surface (5) according to Claim 5, **characterized in that** the determination of the real intersection (25a) between the visual support (7) and the water surface (5) comprises the following steps:

• a plurality of possible intersections (25) between the visual support (7) and the water surface (5) is determined by analysing the value of at least one parameter associated with the pixels representing a zone of the image comprising at least the visual support (7) and a part of the water surface (5),

• the contours (27) of the visual support (7) are determined by analysing the value of at least one other parameter associated with the pixels representing a zone of the image comprising at least the visual support (7) and a part of the water surface (5),

• the real intersection (25a) is determined as corresponding at one and the same time to a possible intersection (25) and to a discontinuity of the contours (27) of the visual support (7).

7. Method for determining an observation parameter associated with a water surface (5) according to one of Claims 4 to 6, **characterized in that** at least one surface speed is calculated on the basis of a first observation image and of a second observation image, by estimating the displacement of at least one tracer (37) on the surface of the water surface (5) between the said first observation image and the said second observation image, and on the basis of a time interval between the capture of the said first observation image and the said second observation image.

8. Method for determining an observation parameter associated with a water surface (5) according to Claim 7, **characterized in that** the displacement of the tracer (37) is determined by velocimetry by particle imaging.

9. Method for determining an observation parameter associated with a water surface (5) according to one of Claims 7 or 8, comprising the following steps:

• two observation images are subtracted so as to obtain a composite image,

• the value of at least one parameter associated with the pixels of the composite image is compared with a threshold of variation of the value of the said parameter,

• zones of the composite image that are defined by the pixels whose value of at least one parameter is greater than the said threshold of variation of the value of the said parameter are preserved, the preserved zones of the composite image are called shifting zones (9),

• the surface speeds of the tracers (37) are determined on the basis of the said shifting zones.

10. Method for determining an observation parameter associated with a water surface (5) according to one of Claims 7 to 9, **characterized in that** the determination of at least one surface speed comprises an additional step during which a first scaled image is created on the basis of the first observation image and a second scaled image is created on the basis of the second observation image, and on which all the pixels represent the same geographical surface.

11. System for determining an observation parameter associated with a water surface (5), for the implementation of a method for determining an observation parameter associated with a water surface (5) by imaging according to any one of the preceding claims, **characterized in that** the said system comprises:

> • a picture-taking device (23) configured to capture data relating to an observation site comprising the water surface (5), the said data comprising:

>> ◦ at least one observation image of the observation site comprising the water surface (5), at least one permanent structure (15) and at least one visual support (7) at least partially immersed in the water surface (5), and
>> ◦ at least one reference image of the observation site comprising tangible reference points (19) and intangible reference points (21), the said tangible reference points being present on the permanent structure (15) and on the visual support (7), and the position of at least one intangible reference point (21) being indicated with the aid of at least one temporary structure (20) on the observation site some distance from the permanent structure (15) and some distance from the visual support (7),

> • means for determining reference geographical coordinates $(x_{n0}, y_{n0}, z_{n0})$ of the said tangible reference points (19) and of the said intangible reference points (21),
> • data processing means configured to:

>> ◦ determine reference image coordinates $(i_{n0}, j_{n0})$ of the tangible reference points (19) and of the intangible reference points (21),

>> ◦ determine a mathematical model $(\mathcal{M})$ making it possible to calculate image coordinates on the basis of geographical coordinates of an object on the observation site by using the reference geographical coordinates $(x_{n0}, y_{n0}, z_{n0})$ and reference image coordinates $(i_{n0}, j_{n0})$ of the tangible reference points (19) and of the intangible reference points (21) and respective observation image coordinates $(i_n, j_n)$ of the said reference points (19,21) on the observation image,
>> ◦ establish the observation image coordinates $(i_n, j_n)$ of the water surface (5) at the location of the at least one visual support (7) on the observation image by virtue of the visual support (7),

>> ◦ use the mathematical model $(\mathcal{M})$ with the observation image coordinates $(i_n, j_n)$ of the water surface (5) on the observation image to determine at least one observation parameter of the water surface (5), and

> • means for transmitting data between the picture-taking device (23) and the data processing means.

12. System for determining an observation parameter associated with a water surface (5) according to Claim 11, **characterized in that** the picture-taking device (23) is a digital picture-taking device.

Fig.1

Fig.2

Fig.3a

Fig.3b

E101

E1

E102

Fig.4

E103

E104

Fig.5

15    19

5

23    7

20    21

Z
Y
O    X

# Fig.7

E201

E20

E202

E203

E204

E205

E206

E207

E208

# Fig.6

E1

E2

E20

E30

E20

E30

E20

E30

E20

Fig.8a

Fig.8b

Fig.9a

Fig.9b

Fig.10a

Fig.10b

Fig.10c

E301

E30

E302

Fig.11

E303

E304

Fig.12

7    5    23

θ    h

33    35    31

D

Fig.13

Fig.15

Fig.14a

Fig.14b

## Fig.14c

## Fig.14d

**RÉFÉRENCES CITÉES DANS LA DESCRIPTION**

**Littérature non-brevet citée dans la description**

- **GUILLAUME FOURQUET.** *Développement d'un système hydrométrique par analyses d'images numériques,* 07 Mars 2005